# EUROPEAN PATENT APPLICATION

(11) **EP 3 517 243 A1**
(43) Date of publication of application: **31.07.2019**
(21) Application number: 17852949.1
(22) Date of filing: 14.09.2017
(51) Int. Cl.: B23K 26/22, B21D 22/02, B21D 22/04, B23K 9/007, B23K 9/02, B23K 9/167, B23K 9/173, B23K 9/23, B23K 10/02, B23K 26/21, B23K 26/211, B23K 26/323, B23K 26/348, B23K 103/18, B23K 103/20

(54) **SPOT WELDING METHOD FOR JOINING DIFFERENT MATERIALS, JOINING ASSISTANCE MEMBER, AND DIFFERENT MATERIAL WELDED JOINT**

(30) Priority: 26.09.2016 JP 2016187536
(71) Applicant: Kabushiki Kaisha Kobe Seiko Sho (Kobe Steel, Ltd.), Kobe-shi, Hyogo 651-8585 (JP)
(72) Inventor: SUZUKI Reiichi, Kanagawa 251-8551 (JP)
(74) Representative: Müller-Boré & Partner Patentanwälte PartG mbB
(86) International application number: PCT/JP2017/033310
(87) International publication number: WO 2018/056172

(57) **Abstract**

A different material welded joint (1) that comprises: an aluminum alloy or magnesium alloy upper plate (10); and a steel lower plate (20) that is spot welded to the upper plate (10). The upper plate (10) has a hole (11) that faces an overlapped surface of the lower plate (20). The present invention also comprises a steel joining assistance member (30) that has: a stepped outer shape that has an inserted part (31), which is inserted into the hole (11) provided in the upper plate (10), and a not-inserted part (32); and, in a center part thereof, a recessed part (33) that is recessed from the not-inserted part (32) toward the inserted part (31). A fused part (W) is formed from the lower plate (20) and the inserted part (31) of the joining assistance member (30).

## Description

### TECHNICAL FIELD

The present invention relates to a spot welding method for dissimilar material joining, a joining assist member, and a dissimilar material welded joint.

### BACKGROUND ART

Transport equipment as typified by automobiles is always required to be increased in drive fuel efficiency for the purpose of suppressing various items such as (a) the consumption of petroleum fuels which are limited resources, (b) CO₂ which is a global warming gas generated with burning, and (c) the running cost. Among means as an improvement measure is vehicle weight reduction as well as improvements in motive force-related technologies such as use of electric driving. One means for weight reduction is to replace steel which is a current main material with light materials such as aluminum alloys, magnesium alloys, carbon fiber, etc. However, replacing all of the materials with such light materials has problems such as cost increase and insufficiency in strength. As a countermeasure against these problems, a design method so called "multi-material" in which a proper combination of steel and a light material are used at each location is now attracting attention.

Combining steel and any of the above-described light materials necessarily results in occurrence of a position where to join these materials. Whereas steel materials, aluminum alloy materials, or magnesium alloy materials can be welded to each other easily, it is known that welding of different materials is very difficult. This is because intermetallic compounds (IMCs) which are very fragile are formed in a melt-mixing portion between steel and aluminum or magnesium and destroyed easily when receiving external stress caused by tension, impact, or the like. As a result, such welding methods as the resistance spot welding method and the arc welding method cannot be used for dissimilar material joining and it is common to use other joining methods. Welding cannot be used for joining of steel and carbon fiber because the latter is not a metal.

Among conventional dissimilar material joining techniques is, for example, a means in which through-holes are formed through both of a steel material and a light material and they are bound together by pressing them against each other from both sides using a bolt and a nut. Another example means is known in which materials are bound together by a swaging effect by inserting a swaging member from one side by applying a strong pressure to it (refer to Patent document 1, for example).

A still another example means is proposed in which a steel joining member is pushed, as a punch, into an aluminum alloy material, whereby a hole is formed and the joining member is bound tentatively. Subsequently, the aluminum alloy material is overlapped with a steel material, the two kinds of members are sandwiched between copper electrodes from both sides, and the steel material and the joining member are resistance-welded to each other by applying pressure and large current to them instantaneously. (Refer to Patent document 2, for example.)

A further example means has been developed in which an aluminum alloy material and a steel material are joined together directly using a friction stir joining tool (refer to Patent document 3, for example).

### Prior Art Documents

### Patent Documents

Patent document 1: JP-A-2002-174219
Patent document 2: JP-A-2009-285678
Patent document 3: Japanese Patent No. 5,044,128

### SUMMARY OF THE INVENTION

### Problems to be Solved by the Invention

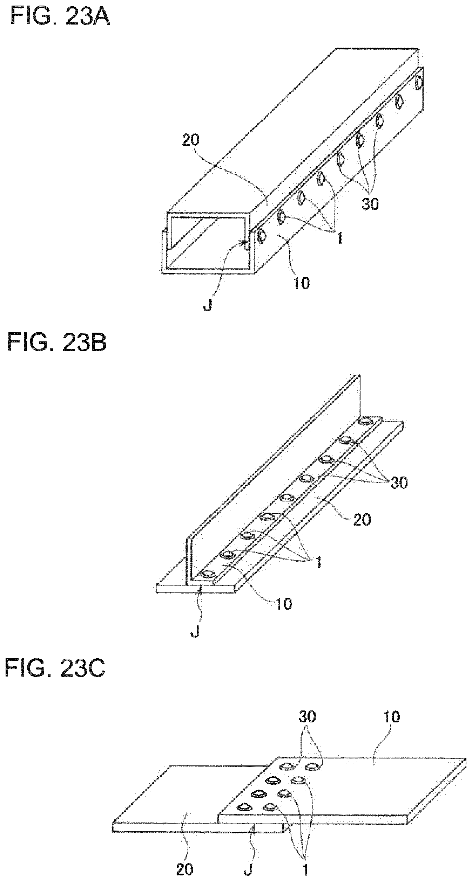

However, the bolt-nut joining method cannot be applied to a case that a steel material and a light material form a structure having a closed cross section (see FIG. 23A) because nuts cannot be inserted. Even in the case of a joint having an open section structure to which this method is applicable (see FIG. 23B and FIG. 23C), another problem of low efficiency arises because screwing nuts into the materials takes time.

Though the joining method disclosed in Patent document 1 is a relatively easy method, it is associated with a problem that the swaging member cannot be inserted in the case where the steel material is high in strength and a problem that high joining strength cannot be obtained because the joining strength depends on the frictional force and the stiffness of the swaging member. There is another problem that this joining method cannot be applied to a closed section structure because it is necessary to press the swaging member by a jig from the front side and the back side in inserting the swaging member.

The joining method disclosed in Patent document 2 cannot be applied to a closed section structure, either.

As for the joining method disclosed in Patent document 3, where pressure is applied to the surface of a steel material while an aluminum alloy material is caused to flow plastically in a low temperature range, the two materials do not melt-mix with each other, necessary metallic bonding force can be obtained without formation of intermetallic compounds. There exists a study report stating that joining of steel and carbon fiber is also possible. However, this joining method is associated with problems that it cannot be applied to a closed section structure either, and that it requires a large mechanical facility and hence is expensive because high pressure needs to be generated. Furthermore, resulting joining force is not very strong. There is another problem that working speed is low.

As such, each of the existing dissimilar material joining techniques has one or more of the problems that (i) the materials and the groove shape are restricted to ones suitable for an open section structure, (ii) the joining strength is low, and (iii) the working speed is low. Thus, to spread multi-material designing that enables combination of various kinds of materials, a new technique is desired that is easy to use and satisfies all of conditions of (i') being applicable to both of an open section structure and a closed section structure, (ii') attaining sufficiently high joining strength and being high in reliability, and (iii') being high in speed.

The present invention has been made in view of the above problems, and an object of the invention is therefore to provide a spot welding method for dissimilar material joining, a joining assist member, and a dissimilar material welded joint that make it possible to join different materials, that is, steel and an aluminum alloy (hereinafter also referred to as "Al alloy") or a magnesium alloy (hereinafter also referred to as "Mg alloy"), with high efficiency and quality of being high in strength and reliability, and that can be applied to both of an open section structure and a closed section structure with no limitations.

### Means for Solving the Problems

To melt-join steel and an Al alloy or an Mg alloy, formation of intermetallic compounds (IMCs) is unavoidable as mentioned above. On the other hand, it is apparent scientifically and empirically that steel-to-steel welding provides highest joining strength and reliability.

In view of the above, the inventors have conceived a means capable of attaining joining dissimilar material by using steel-to-steel welding and further using connection force.

The above object of the invention is thus attained by the constitutions and configurations described below:
(1) A spot welding method for dissimilar material joining for joining a first plate made of an aluminum alloy or a magnesium alloy and a second plate made of steel, the method including:
   a step of making a hole through the first plate;
   a step of overlapping the first plate and the second plate;
   a step of inserting a joining assist member made of steel into the hole formed in the first plate, the joining assist member having a stepped external shape including an insertion portion and a non-insertion portion and having a recess in a central portion recessed in a direction from the non-insertion portion to the insertion portion; and
   a step of irradiating the recess of the joining assist member with laser light to join the second plate and the joining assist member.
(2) A spot welding method for dissimilar material joining for joining a first plate made of an aluminum alloy or a magnesium alloy and a second plate made of steel to each other, the method including:
   a step of making a hole through the first plate;
   a step of overlapping the first plate and the second plate;
   a step of inserting a joining assist member made of steel into the hole formed in the first plate, the joining assist member having a stepped external shape including an insertion portion and a non-insertion portion and having a recess in a central portion recessed in a direction from the non-insertion portion to the insertion portion; and
   a step of irradiating the recess of the joining assist member with laser light and performing arc welding by any method of the following (a) to (c) at the same time as the irradiation with laser light, in the middle of the irradiation with laser light or after the irradiation with laser light to join the second plate and the joining assist member and fill at least a part of the recess of the joining assist member with a weld metal:
      (a) a gas-shielded arc welding method using, as a consumable electrode, a welding wire to provide the weld metal made of an iron alloy or a nickel alloy;
      (b) a gas tungsten arc welding method using the welding wire as a non-consumable electrode filler; and
      (c) a plasma arc welding method using the welding wire as a non-consumable electrode filler.
(3) The spot welding method for dissimilar material joining according to (1) or (2), wherein the second plate has a swell portion formed by drawing, and the swell portion of the second plate is placed in the hole of the first plate in the overlapping step.
(4) The spot welding method for dissimilar material joining according to any one of (1) to (3), further including, before the overlapping step, a step of applying an adhesive to at least one of overlapped surfaces of the first plate and the second plate around the hole over its entire circumference.
(5) The spot welding method for dissimilar material joining according to any one of (1) to (4), wherein in the inserting step, an adhesive is applied to at least one of confronting surfaces between the non-insertion portion of the joining assist member and the first plate opposed to the non-insertion portion.
(6) The spot welding method for dissimilar material joining according to any one of (1) to (5), wherein in the inserting step or after the welding step, an adhesive is applied to a boundary between the non-insertion portion of the joining assist member and a surface of the first plate.
(7) The spot welding method for dissimilar material joining according to any one of (1) to (6), wherein a height P_{H1} of a bottom portion of the insertion portion of the joining assist member is 0.5 mm or larger and equal to or smaller than a smaller value of 2.5 mm or smaller and 125% of a thickness B_{H} of the first plate.
(8) The spot welding method for dissimilar material joining according to any one of (1) to (7), wherein an angle θ formed by an outer wall surface of the insertion portion and a horizontal direction is 80° to 95°.
(9) The spot welding method for dissimilar material joining according to any one of (1) to (8), wherein a diameter P_{D1} of a boundary between the insertion portion and the non-insertion portion of the joining assist member is 80% or larger and 105% or smaller of a diameter B_{D} of the hole of the first plate.
(10) The spot welding method for dissimilar material joining according to any one of (1) to (9), wherein the non-insertion portion of the joining assist member has a diameter P_{D2} of 105% or larger of a diameter B_{D} of the hole of the first plate.
(11) The spot welding method for dissimilar material joining according to any one of (1) to (10), wherein the non-insertion portion of the joining assist member has a height P_{H2} of 50% or larger and 150% or smaller of a thickness B_{H} of the first plate.
(12) Ajoining assist member to be used for the spot welding method for dissimilar material joining according to any one of (1) to (11), the joining assist member being made of steel, having a stepped external shape including an insertion portion and a non-insertion portion and having a recess in a central portion recessed in a direction from the non-insertion portion to the insertion portion.
(13) A dissimilar material welded joint including a first plate made of an aluminum alloy or a magnesium alloy and a second plate made of steel and spot-welded to the first plate,
   wherein the first plate has a hole that reaches an overlapped surface to the second plate,
   the dissimilar material welded joint further includes a joining assist member made of steel, having a stepped external shape including an insertion portion inserted in the hole formed in the first plate and a non-insertion portion and having a recess in a central portion recessed in a direction from the non-insertion portion to the insertion portion, and
   a weld portion is formed of the second plate and the joining assist member at an interface between the second plate and the insertion portion of the joining assist member.
(14) The dissimilar material welded joint according to (13), wherein the weld portion further fills at least a part of the recess of the joining assist member.
(15) The dissimilar material welded joint according to (13) or (14), wherein a swell portion formed in the second plate is placed in the hole of the first plate.
(16) The dissimilar material welded joint according to any one of (13) to (15), including an adhesive applied to at least one of overlapped surfaces of the first plate and the second plate around the hole over its entire circumference.
(17) The dissimilar material welded joint according to any one of (13) to (16), including an adhesive applied to at least one of confronting surfaces between the non-insertion portion of the joining assist member and the first plate opposed to the non-insertion portion.
(18) The dissimilar material welded joint according to any one of (13) to (17), including an adhesive applied to a boundary between the non-insertion portion of the joining assist member and a surface of the first plate.
(19) The dissimilar material welded joint according to any one of (13) to (18), wherein a height P_{H1} of a bottom portion of the insertion portion of the joining assist member is 0.5 mm or larger and smaller than a smaller value of 2.5 mm or smaller and 125% of a thickness B_{H} of the first plate.
(20) The dissimilar material welded joint according to any one of (13) to (19), wherein an angle θ formed by an outer wall surface of the insertion portion and a horizontal direction is 80° to 95°.
(21) The dissimilar material welded joint according to any one of (13) to (20), wherein a diameter P_{D1} of a boundary between the insertion portion and the non-insertion portion of the joining assist member is 80% or larger and 105% or smaller of a diameter B_{D} of the hole of the first plate.
(22) The dissimilar material welded joint according to any one of (13) to (21), wherein the non-insertion portion of the joining assist member has a diameter P_{D2} of 105% or larger of a diameter B_{D} of the hole of the first plate.
(23) The dissimilar material welded joint according to any one of (13) to (22), wherein the non-insertion portion of the joining assist member has a height P_{H2} of 50% or larger and 150% or smaller of a thickness B_{H} of the first plate.

### Advantages of the Invention

The invention makes it possible to join different materials, that is, steel and an aluminum alloy or a magnesium alloy, with improved efficiency and quality of being high in strength and reliability and enables application to both of an open section structure and a closed section structure with no limitations.

### BRIEF DESCRIPTION OF THE DRAWINGS

FIG. 1A is a perspective view of a dissimilar material welded joint according to a first embodiment of the present invention.
FIG. 1B is a sectional view of the dissimilar material welded joint taken along line I-I in FIG. 1A.
FIG. 2A shows boring work of a spot welding method for dissimilar material joining according to this embodiment.
FIG. 2B shows overlapping work of the spot welding method for dissimilar material joining according to the embodiment.
FIG. 2C shows insertion work of the spot welding method for dissimilar material joining according to the embodiment.
FIG. 2D shows welding work of the spot welding method for dissimilar material joining according to the embodiment.
FIG. 3 is a top view, a side view, and a bottom view of a joining assist member shown in FIG. 1.
FIG. 4A is a top view showing a first modified example of the joining assist member.
FIG. 4B is a top view showing a second modified example of the joining assist member.
FIG. 4C is a top view showing a third modified example of the joining assist member.
FIG. 4D is a top view showing a fourth modified example of the joining assist member.
FIG. 4E is a top view showing a fifth modified example of the joining assist member.
FIG. 4F is a top view showing a sixth modified example of the joining assist member.
FIG. 5A shows a first step of an example of boring work.
FIG. 5B shows a second step of the example of boring work.
FIG. 5C shows a third step of the example of boring work.
FIG. 6A shows a case of causing the target position of laser irradiation to make a screw motion.
FIG. 6B shows a case of causing the target position of laser irradiation to make a reciprocal motion.
FIG. 7A is a sectional view of a dissimilar material welded joint for description of weld penetration of a weld metal.
FIG. 7B is a sectional view of a dissimilar material welded joint for description of weld penetration of a weld metal.
FIG. 8A is a perspective view of a dissimilar material welded joint as a comparative example in which a top plate made of aluminum and a bottom plate made of steel are overlapped and welded by penetration welding.
FIG. 8B is a sectional view of the dissimilar material welded joint shown in FIG. 8A.
FIG. 9A is a sectional view showing a state of the dissimilar material welded joint shown in FIG. 8A that has received shearing tension.
FIG. 9B is a perspective view of the dissimilar material welded joint shown in FIG. 9A.
FIG. 10A is a sectional view showing a state of the dissimilar material welded joint shown in FIG. 8A that has received vertical peeling tension.
FIG. 10B is a perspective view of the dissimilar material welded joint shown in FIG. 10A.
FIG. 11 is a sectional view of a dissimilar material welded joint showing a state where external forces are acting in thickness directions to separate the top plate and the bottom plate from each other.
FIG. 12A is a sectional view of a dissimilar material welded joint showing a state where external forces are acting in shearing directions to separate the top plate and the bottom plate from each other.
FIG. 12B is a perspective view showing a state where a joining portion is inclined by close to 90° by strong stress acting on the dissimilar material welded joint shown in FIG. 12A in shearing directions.
FIG. 13A is a sectional view of the top plate, the bottom plate, and the joining assist member showing a state before laser welding in a case where a gap exists between the top plate and the bottom plate.
FIG. 13B is a sectional view of the dissimilar material welded joint showing a state after the laser welding together with thermal contraction forces.
FIG. 14A is a sectional view of a dissimilar material welded joint showing a state where a joining assist member having a recess is being laser-welded.
FIG. 14B is a sectional view of a dissimilar material welded joint as a comparative example showing a state where a joining assist member not having a recess is being laser-welded.
FIG. 15A is a sectional view of the top plate, the bottom plate, and the joining assist member for description of dimensional relationships of the joining assist member.
FIG. 15B is an enlarged view of part XV of FIG. 15A.
FIG. 16A is a perspective view of the top plate and the bottom plate for description of a spot welding method for dissimilar material joining according to a first modification.
FIG. 16B is a sectional view of the top plate and the bottom plate for description of the spot welding method for dissimilar material joining according to the first modification.
FIG. 17A is a perspective view of the top plate and the bottom plate for description of a spot welding method for dissimilar material joining according to a second modification.
FIG. 17B is a sectional view of the top plate and the bottom plate for description of the spot welding method for dissimilar material joining according to the second modification.
FIG. 18A is a perspective view of the top plate, the bottom plate, and the joining assist member for description of a spot welding method for dissimilar material joining according to a third modification.
FIG. 18B is a sectional view of the top plate, the bottom plate, and the joining assist member for description of the spot welding method for dissimilar material joining according to the third modification.
FIG. 19 shows a state that laser welding is being performed in a horizontal posture in the third modification.
FIG. 20A is a perspective view of a dissimilar material welded joint for description of a spot welding method for dissimilar material joining according to a fourth modification.
FIG. 20B is a sectional view of the dissimilar material welded joint for description of the spot welding method for dissimilar material joining according to the fourth modification.
FIG. 21A is a top view, a side view, and a bottom view of a seventh modified example of the joining assist member.
FIG. 21B is a top view, a side view, and a bottom view of an eighth modified example of the joining assist member.
FIG. 22 is a sectional view of a ninth modified example of the joining assist member.
FIG. 23A is a perspective view showing a closed section structure to which the dissimilar material welded joint according to the embodiment is applied.
FIG. 23B is a perspective view showing an open section structure formed by an L-shaped plate and a flat plate to which the dissimilar material welded joint according to the embodiment is applied.
FIG. 23C is a perspective view showing an open section structure formed by two flat plates to which the dissimilar material welded joint according to the embodiment is applied.
FIG. 24A is a sectional view of a dissimilar material welded joint according to a second embodiment of the invention.
FIG. 24B is a sectional view of a dissimilar material welded joint according to the second embodiment of the invention in which a weld metal has an excess weld metal.
FIG. 25 is a sectional view of the dissimilar material welded joint shown in FIG. 24B and shows a state where external forces are acting in thickness directions to separate the top plate and the bottom plate from each other.
FIG. 26A is a perspective view of a dissimilar material welded joint in a state where laser welding and MAG welding or MIG welding are being performed according to the second embodiment.
FIG. 26B is a perspective view of a dissimilar material welded joint in a state where laser welding and TIG welding or plasma welding are being performed according to the second embodiment.
FIG. 27 shows three timing patterns of laser welding and arc welding.
FIG. 28 is a sectional view of a dissimilar material welded joint according to a modification of the second embodiment.
FIG. 29A is a sectional view showing a state before a swell portion is formed by drawing in the bottom plate shown in FIG. 28.
FIG. 29B is a sectional view showing a state where the swell portion has been formed by drawing in the bottom plate shown in FIG. 28.

### MODES FOR CARRYING OUT THE INVENTION

A spot welding method for dissimilar material joining, a joining assist member, and a dissimilar material welded joint according to each embodiment of the present invention will be hereinafter described in detail with reference to the drawings.

### (Embodiment 1)

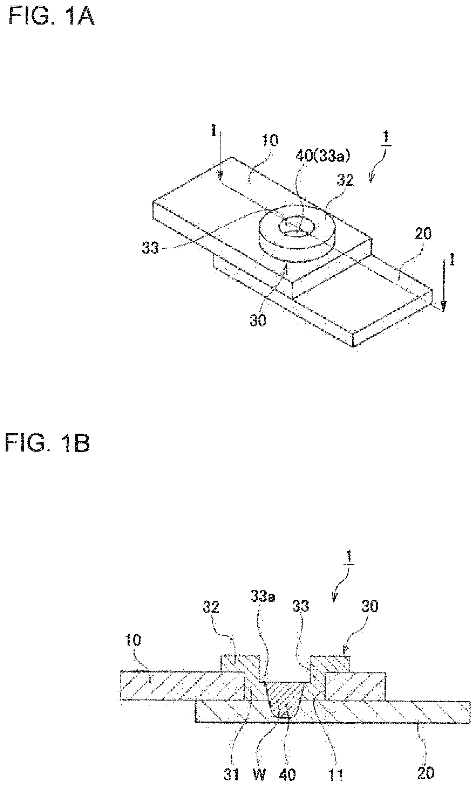

In a spot welding method for dissimilar material joining according to this embodiment, a dissimilar material welded joint 1 as shown in FIG. 1A and FIG. 1B is obtained by joining a top plate 10 (first plate) made of an aluminum alloy or a magnesium alloy and a bottom plate 20 (second plate) made of steel that are overlapped with each other, via a joining assist member 30 made of steel, by a laser spot welding method described later.

The top plate 10 has a hole 11 that reaches an overlapped surface to the bottom plate 20 to penetrate in the thickness direction, and the joining assist member 30 is inserted into the hole 11.

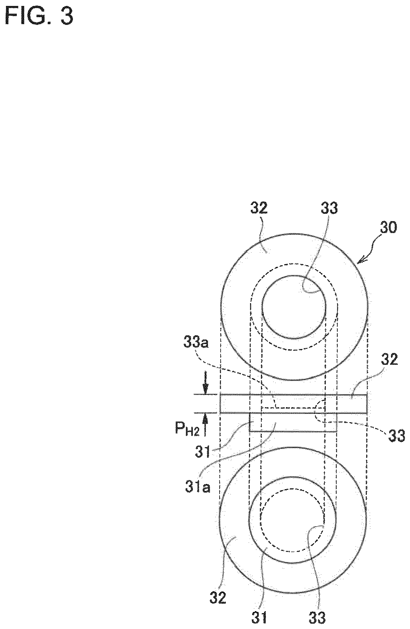

As shown in FIG. 3, the joining assist member 30 has a stepped external shape including an insertion portion 31 to be inserted into the hole 11 of the top plate 10 and a flange-shaped circular non-insertion portion 32 to be put on the top surface of the top plate 10. The joining assist member 30 has a recess 33 in a central portion formed to be recessed in the direction from the non-insertion portion 32 to the insertion portion 31 and shaped like a circle when viewed from above.

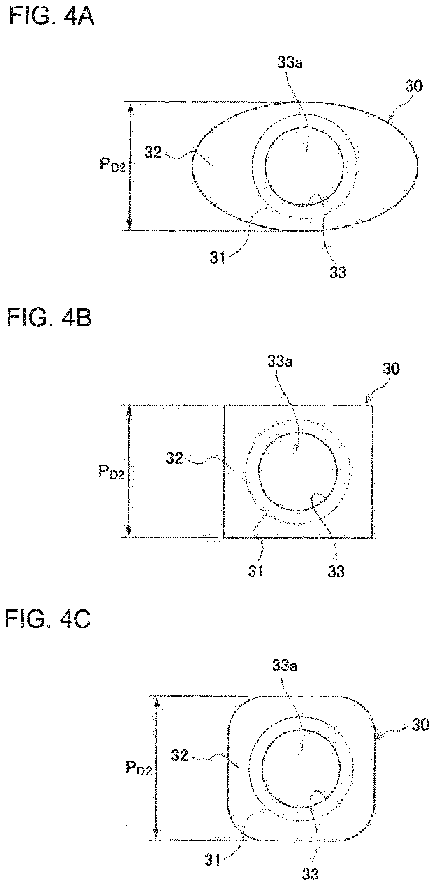

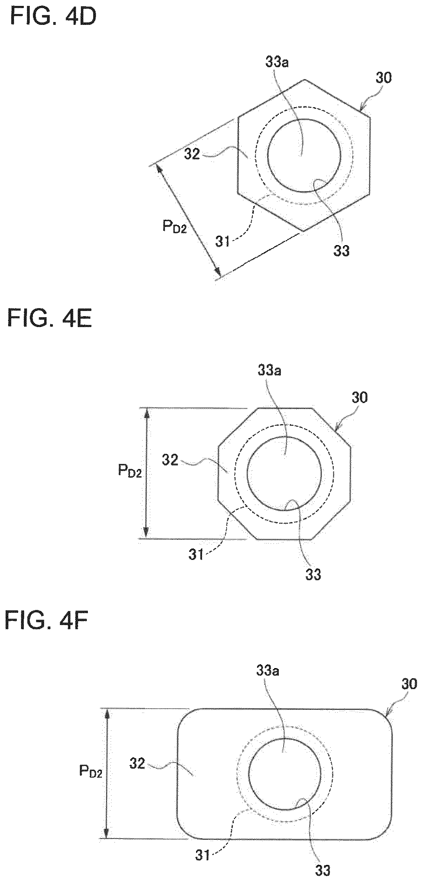

The external shape of the non-insertion portion 32 is not limited to a circle and may be any shape as long as it can close the hole 11 of the top plate 10 after welding. For example, the external shape of the non-insertion portion 32 may be an ellipse as shown in FIG. 4A, a square as shown in FIG. 4B, a square having round corners as shown in FIG. 4C, a hexagon as shown in FIG. 4D, an octagon as shown in FIG. 4E, or a rectangle having round corners as shown in FIG. 4F.

In the case where the non-insertion portion 32 is not circular, the diameter P_{D2} described later of the non-insertion portion 32 is defined as a shortest distance between confronting points.

Furthermore, the height level of a bottom surface 33a of the recess 33 may be approximately the same as, higher than, or lower than that of the bottom surface of the non-insertion portion 32.

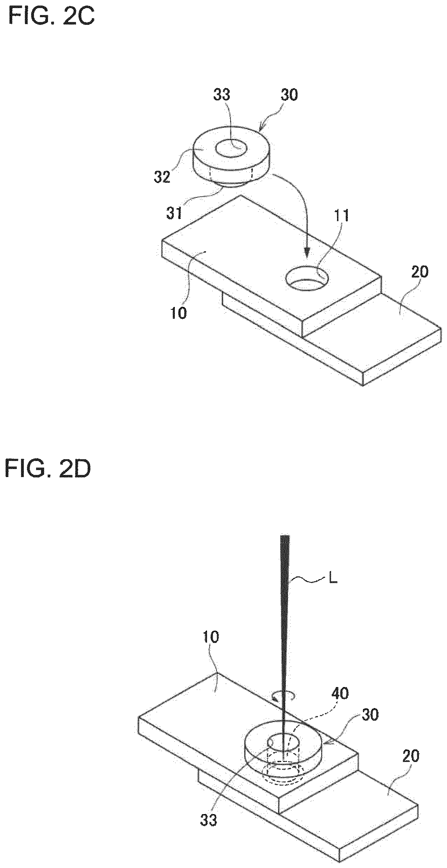

By irradiating the recess 33 of the joining assist member 30 with laser light L (see FIG. 2D), a weld portion W is formed of a weld metal 40 of molten portions of the bottom plate 20 and the joining assist member 30 at the interface between the bottom plate 20 and the insertion portion of the joining assist member 30. In this case, the weld portion W is formed so as to extend from the bottom surface 33a of the recess 33 past the above-mentioned interface and to occupy a portion of the bottom plate 20 located under the bottom surface 33a of the recess 33 in the joining assist member 30.

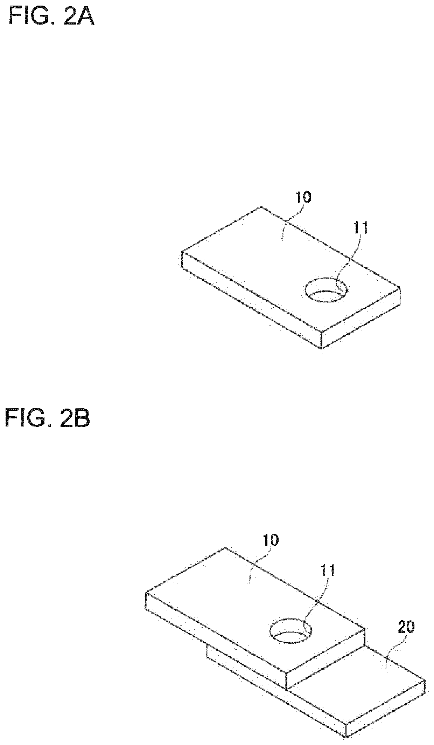

A spot welding method for dissimilar material joining for constructing the dissimilar material welded joint 1 will be described below with reference to FIG. 2A to FIG. 2D.

First, as shown in FIG. 2A, boring work for making a hole 11 through the top plate 10 is performed (step S1). Overlapping work of overlapping the top plate 10 and the bottom plate 20 with each other is then performed as shown in FIG. 2B (step S2). Then, as shown in FIG. 2C, the insertion portion 31 of the joining assist member 30 is inserted into the hole 11 of the top plate 10 from the top surface of the top plate 10 (step S3). Subsequently, as shown in FIG. 2D, the bottom plate 20 and the joining assist member 30 are laser-welded to each other by a weld metal 40 formed by irradiating the recess 33 of the joining assist member 30 with laser light L (step S4).

Specific examples of methods for the boring work of step S1 include a) cutting using a rotary tool such as an electric drill or a drilling machine, b) punching with a punch, and c) press punching using a die.

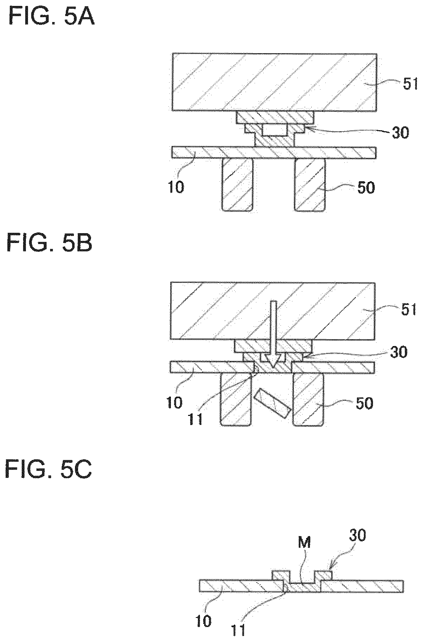

FIG. 5A to FIG. 5C show a special method in which an upper stage 51 on which the joining assist member 30 is fixed is brought close to a lower stage 50 on which the top plate 10 is mounted and punching is performed using the joining assist member 30 itself as a punch, whereby boring work of step S1 and joining assist member 30 insertion work of step S3 are performed at the same time.

Thus, when this method is employed, the overlapping work of step S2 and the joining assist member 30 insertion work of step S3 are interchanged in order.

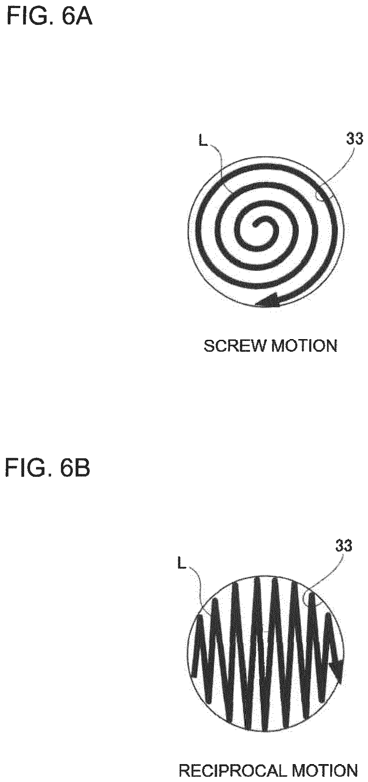

As an oscillator for a welding laser used in step S4, any of various kinds of lasers such as a carbon dioxide laser, a semiconductor laser (also called a diode laser), a YAG laser, a disk laser, and a fiber laser can be applied to this working method. As for the laser irradiation method, if the target position is fixed, it is difficult to form a wide weld metal because of a narrow melting range. Thus, a method is employed in which a weld penetration range having a proper area is obtained by, for example, causing a screw motion to move the target position spirally at high speed as shown in FIG. 6A or causing a reciprocal motion as shown in see FIG. 6B by a lens system operation of a Galvano scanner or a mechanical movement of a welding robot.

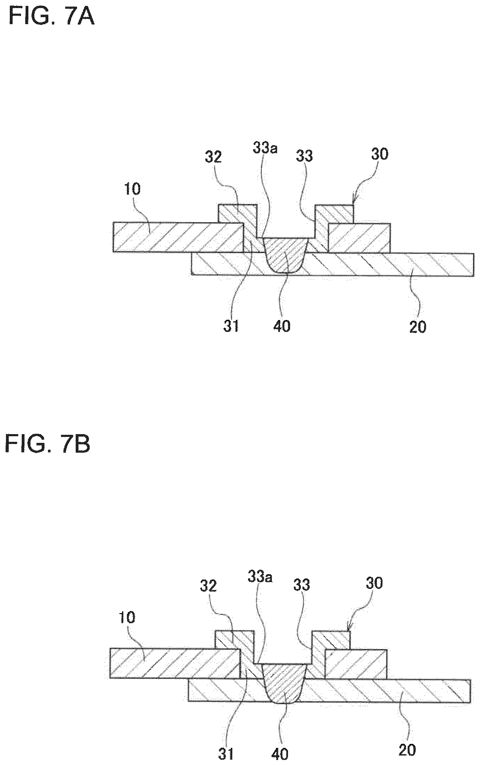

As shown in FIG. 7A, it is necessary that the weld penetration of laser welding be such that a proper portion of the bottom plate 20 be melted. No problem is raised even if as shown in FIG. 7B the weld metal 40 is formed past the bottom surface of the bottom plate 20, that is, the bottom plate 20 is melted to such an extent that what is called a penetration bead is formed.

However, high strength cannot be obtained if no part of the bottom plate 20 is melted and a weld metal 40 is merely placed thereon. On the other hand, welding needs to be performed so that a weld metal 40 does not melt so deep that the weld metal 40 and part of the bottom plate 20 cause burn-through.

Laser welding conditions are set taking into consideration the thickness of a bottom portion 31a (see FIG. 3) of the insertion portion 31 of the joining assist member 30, the thickness of the bottom plate 20, their materials, and other factors.

By doing the above steps of work, the top plate 10 made of an A1 alloy or an Mg alloy and the bottom plate 20 made of steel can be joined with high strength.

Roles of the steel joining assist member 30 that is used in the above-described laser spot welding method will be described below.

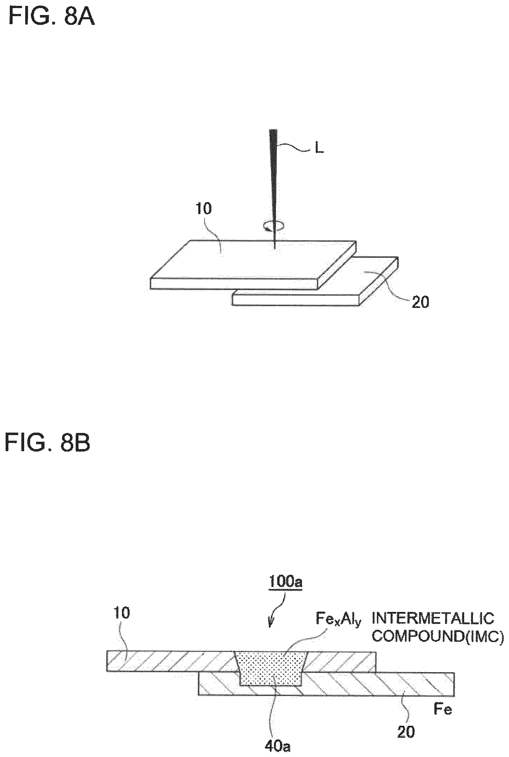

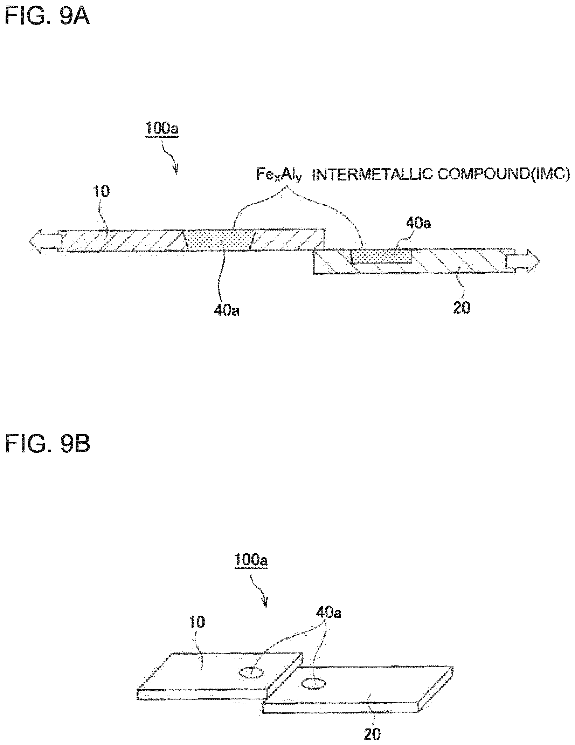

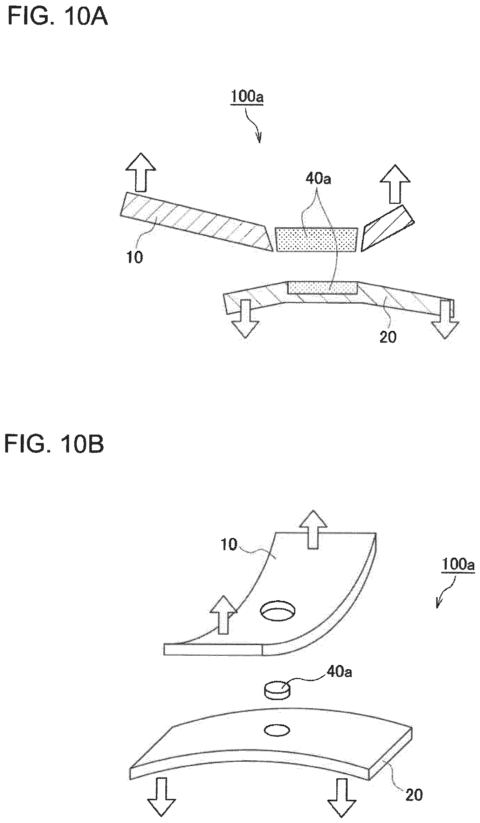

First, where as shown in FIG. 8A and FIG. 8B a top plate 10 made of aluminum is simply overlapped with a bottom plate 20 made of steel without a joining assist member and laser spot welding of integrating the plates 10 and 20 by melting parts of them by applying laser light from right above is performed, a weld metal 40a is formed that is an alloy of aluminum and steel. Having a large aluminum content, this alloy is in the form of intermetallic compounds (IMCs) which are fragile. Although it appears that joining is made in such a dissimilar material welded joint 100a, the weld metal 40a is broken easily and disjoining occurs as shown in FIG. 9A and FIG. 9B when receiving tensile stress in a horizontal direction (shearing tension). Also when receiving tensile stress in the vertical direction (peeling tension), as shown in FIG. 10A and FIG. 10B the weld metal 40a is broken or the interface portion between the weld metal 40a and the top plate 10 or the interface portion between the weld metal 40 and the bottom plate 20 is broken and disjoining occurs in such a manner that the top plate 10 comes off.

As described above, in the case where the top plate 10 made of aluminum or magnesium and the bottom plate 20 made of steel are simply overlapped and they are subjected to penetration welding, the entire weld metal 40a becomes intermetallic compounds and hence is vulnerable to both of shearing tension and peeling tension. As such, this dissimilar material welded joint is not suitable for practical use.

In view of the above problems of the dissimilar material welded joint 100a, the joining assist member 30 according to the embodiment is used to withstand stresses in both directions, that is, shearing stress and vertical stress without forming intermetallic compounds. More specifically, as shown in FIG. 2A to FIG. 2D, a hole is made through the top plate 10, the insertion portion 31 of the joining assist member 30 is inserted into the hole 11 formed in the top plate 10, and a weld portion W formed of a weld metal 40 is formed at the interface between the joining assist member 30 and the bottom plate 20 by irradiating the bottom surface 33a of the recess 33 with laser light. This provides a state where the joining assist member 30, the weld metal 40, and the bottom plate 20 are weld-joined by strong metallic bonding in a cross section.

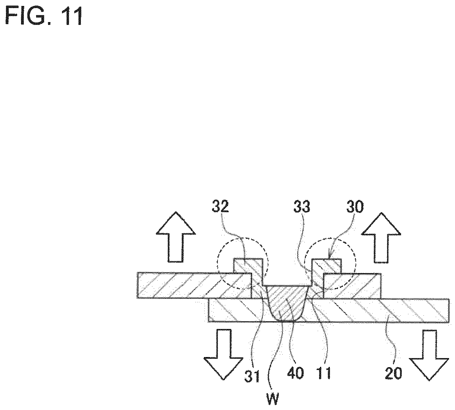

The non-insertion portion 32, being wider than the hole 11 of the top plate 10, of the joining assist member 30 has a role of providing resistance to vertical peeling stress. As shown in FIG. 11, the use of the joining assist member 30 having a proper size can prevent a phenomenon that the top plate 10 is peeled off the weld metal 40 at their interface and thereby comes off. In general, the weld metal 40 fractures after sufficient plastic deformation.

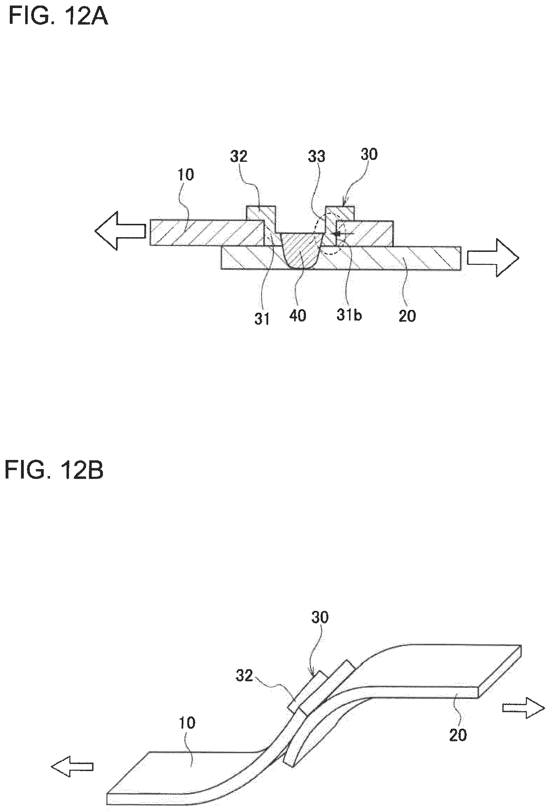

On the other hand, the insertion portion 31 of the joining assist member 30 not only plays a role of forming a sound weld portion W as described above but also serves as a resistive body against stress in the shearing direction in an initial period. More specifically, as shown in FIG. 12A, an outer wall surface 31b of the insertion portion 31 of the joining assist member 30 inserted in the hole 11 of the top plate 10 prevents a horizontal movement of the top plate 10 as a physical obstacle. When strong stress in the shearing direction is received, the base material is deformed in a final period. If the joining portion is inclined by close to 90° as shown in FIG. 12B, the same state as in the case of reception of vertical peeling tension is established. Once this state is established, the non-insertion portion 32 of the joining assist member 30 starts to serve as a resistive body against stress in the vertical peeling direction described above to provide an even stronger resistance force.

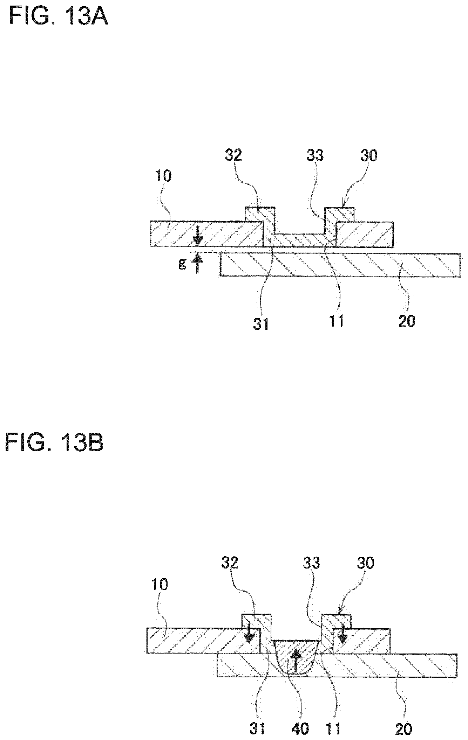

In addition to the effect of increasing the joint strength, the joining assist member 30 provides an effect of reducing the gap g formed between the overlapped surfaces of the top plate 10 and the bottom plate 20 (see FIG. 13A). In the welding step, the weld metal 40 undergoes thermal contraction to provide force of bringing the bottom plate 20 and the joining assist member 30 closer to each other. As a result, even if a small gap g exists before welding, after the welding the gap g is reduced as shown in FIG. 13B, which means increase in the design accuracy of the joining portion.

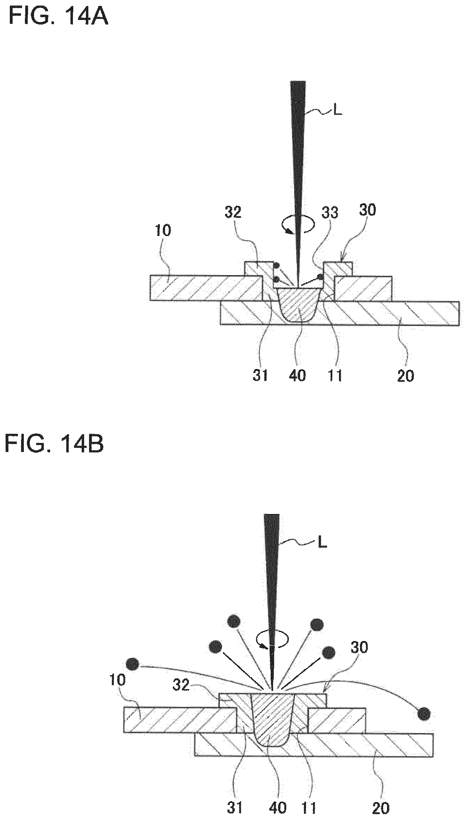

Next, a description is made of reasons why the recess 33 is formed in the joining assist member 30. In the case where a two-level shape including the insertion portion 31 and the non-insertion portion 32, the above-described effects of resisting vertical peeling stress and shearing tensile stress and reducing the gap and it is not always necessary to form a recess in a central portion. However, in the case where the welding portion is thick as shown in FIG. 14B, large energy is necessary to cause weld penetration to the bottom plate 20 through it. In the laser welding method, increase in output power results in increase in the price of the laser oscillator producing such power, which means a disadvantage in cost. Furthermore, whereas a high-output-power laser is high in boring ability, it has a drawback of spewing out molten material from a weld pool to a wide neighboring area. Resulting increased sputtered material not only degrades the quality of a product but also sticks to and stains a protective glass and lenses of the laser welding machine, resulting in a factor in lowering its focusing performance and deteriorating its long-term operation performance. Although these problems are less prone to occur if a long time is taken to perform welding using a lower-output-power laser, this results in low efficiency and deprives the laser welding of its advantages. For these reasons, as shown in FIG. 14A, the surface to be irradiated with laser light to form a weld portion needs to be recessed to a proper extent. As for its shape, the recess 33 also provides an effect that its wall surface catches sputtered material that is produced by irradiation of the recess 33 with laser light and thereby prevents the sputtered material from being scattered to the neighborhood.

There are no particular limitations on the specific material of the steel joining assist member 30 except that it should be pure iron or an iron alloy. Specific examples include soft steel, carbon steel, and stainless steel. As for the manufacturing means of the joining assist member 30, it may be manufactured by forging, casting, or cutting. Although a joining assist member having a similar shape can be manufactured by deep drawing, deep drawing is not a desirable manufacturing method because as described later it is technically difficult to obtain a large angle θ of the wall surface of the insertion portion.

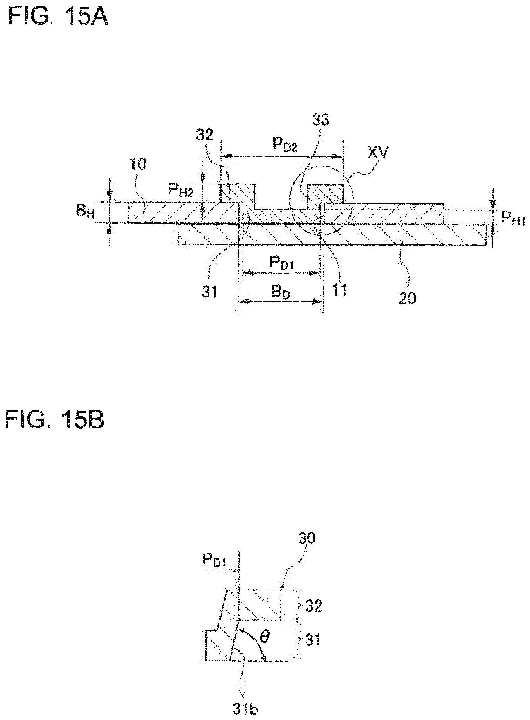

As shown in FIG. 15A and FIG. 15B, various dimensions of the joining assist member 30 are set in the following manners with respect to the top plate 10.

### Height P_{H1} of bottom portion of insertion portion

The height P_{H1} of the bottom portion 31a of the insertion portion 31 is designed to be 0.5 mm or larger, and equal to or smaller than the smaller value of 2.5 mm or smaller and 125% of the thickness B_{H} of the top plate 10. The bottom portion 31a of the insertion portion 31 is a portion to be melted together with part of the bottom plate 20 and integrated by laser welding. As the bottom portion becomes thinner, it can be melted faster using a low-output-power laser but the joint tension resisting performance is lowered. This requires combination with arc welding, which results in lowering in the efficiency. To balance the above factors, it is desirable that the lower limit of the height P_{H1} of the bottom portion 31a be set at 0.5 mm. On the other hand, as the bottom portion becomes thicker, the stiffness of the member is increased and the joint tension resisting performance is enhanced even without combination with arc welding. However, as the bottom portion becomes thicker, a laser to provide the higher output power needs to be employed. This results in lack of industrial practicality in terms of cost. More sputtered material is produced. There may occur a case that a low-output-power laser cannot melt the bottom plate 20. The upper limit of the thickness of a plate that can be welded with high efficiency using a widespread laser oscillator having an output power 6 kW is 2.5 mm. Thus, the absolute value of the upper limit of the height P_{H1} of the bottom portion 31a is set at 2.5 mm. However, if B_{H} × 1.25 is smaller than 2.5 mm, the upper limit is set at B_{H} × 1.25 because the joint strength does not increase any more and weight increase is merely caused even if the height P_{H1} of the bottom portion 31a increases past 125% of the thickness B_{H} of the top plate 10.

### Angle θ between outer wall surface of insertion portion and horizontal direction

The angle θ formed by the outer wall surface 31b of the insertion portion 31 and the horizontal direction (see FIG. 15B) is designed to be 80° to 95°. In the case where a hole is made through the top plate 10 by a commonly employed means such as cutting, punching, or die punching, a wall surface is formed perpendicularly to the plate surfaces. On the other hand, the surface that provides resistance force against stress in the shearing direction when the joining assist member 30 comes into contact with it is the outer wall surface 31b of the insertion portion 31. If the outer wall surface 31b of the insertion portion 31 of the joining assist member 30 is inclined, point contact occurs in cross section. On the other hand, if the outer wall surface 31b is vertical, surface contact is established. In the case of point contact, stress concentration occurs there when stress is received, as a result of which the joining assist member 30 is prone to deform and be lowered in strength. Furthermore, to obtain the same welding area, the outer diameter P_{D2} of the non-insertion portion 32 of the joining assist member 30 increases as the angle θ of the outer wall surface 31b decreases. This is a factor in causing wasteful weight increase. Since a larger area is necessary in a joining location, the adaptability to a narrow location is made low. For the above reasons, it is desirable that the outer wall surface 31b of the insertion portion 31 of the joining assist member 30 be as close to vertical as possible. The lower limit of the angle θ is set at 80°. The manufacturing method of the joining assist member 30 for obtaining such an angle θ is restricted to forging, casting, and cutting. It is difficult to obtain such an angle θ by deep drawing. Although forming an angle θ that is larger than 90° is difficult from the aspect of manufacture of a steel joining assist member 30, angles θ up to 95° are allowable in a sense that industrial errors are included.

### Diameter P_{D1} of boundary portion between insertion portion and non-insertion portion

The diameter of the boundary portion between the insertion portion and the non-insertion portion is designed to be 80% or larger and 105% or smaller of the diameter B_{D} of the hole 11 of the top plate 10. Resistance force against a movement in a horizontal direction (two-dimensional directions) of the top plate 10 is mainly provided by the physical contact between the wall surface of the hole 11 of the top plate 10 and the insertion portion 31 of the joining assist member 30. It is therefore the best that in a joined state there is no gap between the insertion portion 31 of the joining assist member 30 and the hole 11 of the top plate 10, that is, the diameter P_{D1} of the insertion portion 31 is the same as (i.e., 100% of) the diameter B_{D} of the hole 11. However, there is no problem even if the diameter of insertion portion 31 of the joining assist member 30 is a little larger because the insertion portion 31 can be pressed into the hole 11 forcibly utilizing elastic deformation of a portion, around the hole 11 of the top plate 10, of the insertion portion 31. The practical upper limit of the insertion portion diameter P_{D1} is 105% of the diameter B_{D} of the hole 11. On the other hand, presence of a gap is not desirable because deviation occurs easily when a horizontal force is received. But a strong resistance force is provided due to contact between the two portions after movement of a distance corresponding to the gap. As described later, in the case where the welding method according to the embodiment is applied to plural locations that are close to each other, gaps at the respective welding portions are seldom in the same direction. In terms of the probability theory, the gap directions are dispersed more as the number of welding portions increases; one welding portion provides resistance force against tensile stress in a certain direction and hence deviation does not occur easily. It is therefore concluded that in general a certain gap is allowable depending on the design accuracy. The lower limit of the insertion portion diameter P_{D1} is set at 80% of the diameter B_{D} of the hole 11. However, from the viewpoint of accuracy, it is even preferable that the lower limit be set at 90%.

### Non-insertion portion diameter P_{D2}

The non-insertion portion diameter P_{D2} is designed to be 105% or larger of the diameter B_{D} of the hole 11 of the top plate 10. The non-insertion portion 32 of the joining assist member 30 dominantly plays a role of providing resistance force when external stress in the thickness direction, that is, peeling stress, is received. The non-insertion portion 32 becomes stronger with respect to external stress in the thickness direction (three-dimensional directions) as its diameter P_{D2} and thickness increase, and it is thus desirable. In the case where the non-insertion portion diameter P_{D2} is smaller than 105% of the diameter B_{D} of the hole 11, when the non-insertion portion 32 is deformed elasto-plastically by external stress in the thickness direction, the apparent diameter of the non-insertion portion 32 is very prone to become smaller than or equal to the diameter B_{D} of the hole 11 of the top plate 10, in which case the top plate 10 is prone to come off. That is, the non-insertion portion 32 does not provide a strong resistance force. Thus, the lower limit of the non-insertion portion diameter P_{D2} is set at 105% of the diameter B_{D} of the hole 11. It is even preferable that the lower limit of the non-insertion portion diameter P_{D2} be set at 120% of the diameter B_{D} of the hole 11. On the other hand, from the viewpoint of the strength of the joining portion, it is not necessary to set the upper limit.

### Non-insertion portion height P_{H2}

The non-insertion portion height P_{H2} is designed to be 50% or larger and 150% or smaller of the thickness B_{H} of the top plate 10. As described above, the non-insertion portion 32 becomes stronger with respect to external stress in the thickness direction (three-dimensional directions) as its diameter and height (thickness) P_{H2} increase, and it is thus more desirable. A stronger resistance force is obtained by increasing the non-insertion portion height P_{H2} according to the thickness B_{H} of the top plate 10 of the joint. In the case where the non-insertion portion height P_{H2} is smaller than 50% of the thickness B_{H} of the top plate 10, an outer circumferential portion of the non-insertion portion 32 is easily deformed elasto-plastically by external stress in the thickness direction. If the apparent diameter of the non-insertion portion 32 becomes smaller than or equal to the diameter B_{D} of the hole 11 of the top plate 10, coming-off is prone to occur. That is, the non-insertion portion 32 does not provide a strong resistance force. Thus, the lower limit of the non-insertion portion height P_{H2} is set at 50% of the thickness B_{H} of the top plate 10. On the other hand, in the case where the non-insertion portion height P_{H2} is larger than 150% of the thickness B_{H} of the top plate 10, not only the appearance is poor because of excessive projection of the non-insertion portion 32 but also the weight is too heavy though the joint has no problem in strength. Thus, it is necessary to set the non-insertion portion height P_{H2} 150% or smaller of the thickness B_{H} of the top plate 10.

Although it is not always necessary to restrict the thickness of the top plate 10 or the bottom plate 20, it is desirable to set the thickness of the top plate 10 to be 4.0 mm or smaller when the working efficiency and the lap welding shape are taken into consideration. On the other hand, it is desirable that the thickness of each of the top plate 10 and the bottom plate 20 be 0.3 mm or larger considering a heat input of the laser welding because an unduly small thickness causes burn-through during welding and thereby makes the welding difficult.

With the above measures, the top plate 10 made of an aluminum alloy or a magnesium alloy and the bottom plate 20 made of steel can be joined strongly.

It is known that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated if water exists in an interface where different kinds of metals are in contact with each other. Thus, where the embodiment is applied to a joining location into which water is prone to intrude, it is necessary to subject the joining location to sealing treatment for preventing intrusion of water to prevent electric corrosion. Also in this joining method, since there are plural interfaces where an Al alloy or Mg alloy comes into contact with steel, it is preferable to use a resin-based adhesive not only for further increase of joint strength but also as a sealing material.

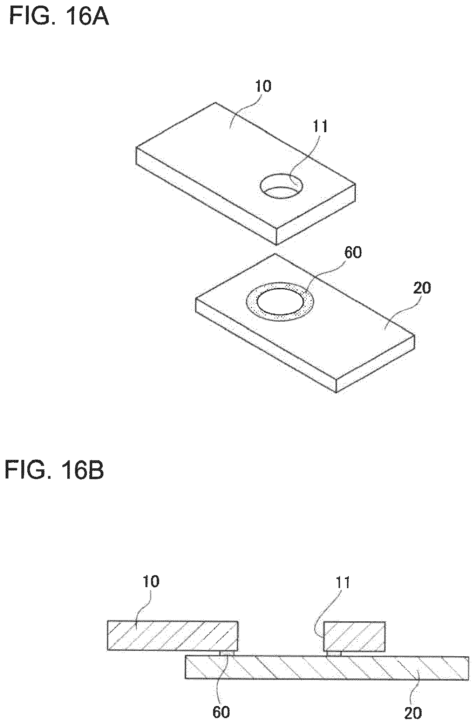

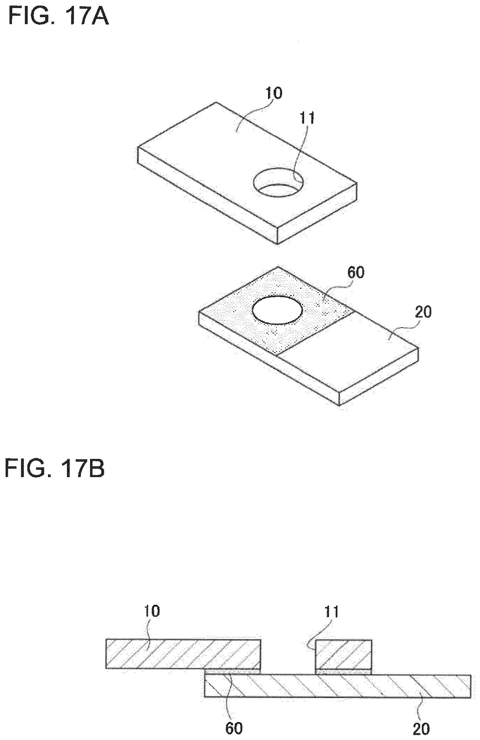

For example, as in a first modification shown in FIG. 16A and FIG. 16B, adhesive 60 may be applied in a ring-like shape around a welding portion over entire circumference between the joining surfaces of the top plate 10 and the bottom plate 20. As in the second modification shown in FIG. 17A and FIG. 17B, another method for applying adhesive 60 fully around a welding portion between the joining surfaces of the top plate 10 and the bottom plate 20 includes a method in which adhesive 60 is applied in the entire area excluding the welding portion. This makes it possible to lower the electric corrosion rates of the top plate 10, the bottom plate 20, and the weld metal 40.

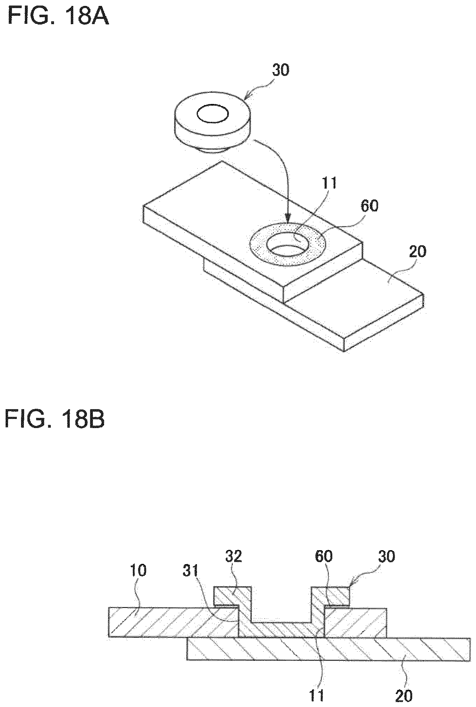

As in a third modification shown in FIG. 18A and 18B, adhesive 60 may be applied between a portion around the hole 11 of the top plate 10 and the bottom surface of the non-insertion portion 32 of the joining assist member 30. This makes it possible to lower the electric corrosion rates of the top plate 10, the joining assist member 30, and the weld metal 40.

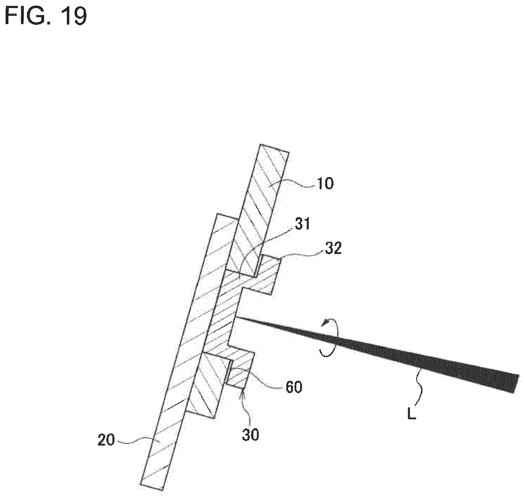

In this case, an auxiliary effect is obtained that the joining assist member 30 is tentatively fixed to the top plate 10 before laser welding. In particular, where as shown in FIG. 19 laser welding is performed in a horizontal or upward-directed posture, applying adhesive 60 in advance makes it possible to prevent the joining assist member 30 from coming off due to gravity and thereby perform welding properly.

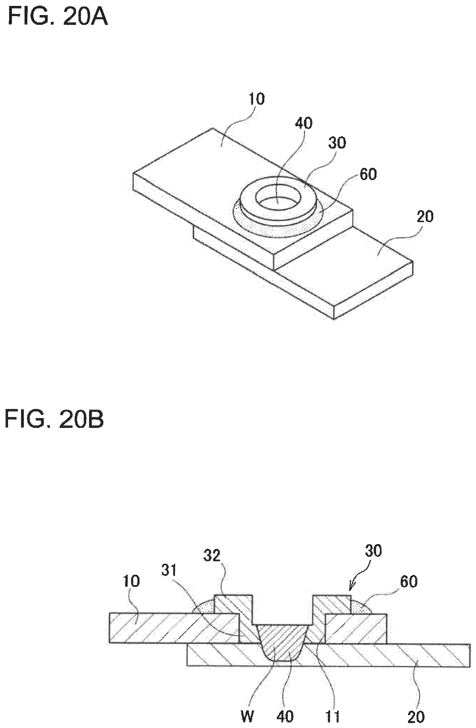

As in a fourth modification shown in FIG. 20A and 20B, adhesive 60 may be applied to the boundary between the non-insertion portion 32 of the joining assist member 30 and the surface of the top plate 10. This provides, in addition to the effect of lowering the electric corrosion rates, an effect that the joining assist member 30 is tentatively fixed to the top plate 10 if the adhesive 60 is applied before the laser welding. Whereas in the third modification shown in FIG. 18A and FIG. 18B the application can be made only before the welding step, in the fourth modification shown in FIG. 20A and FIG. 20B the application can be made either before or after the welding step.

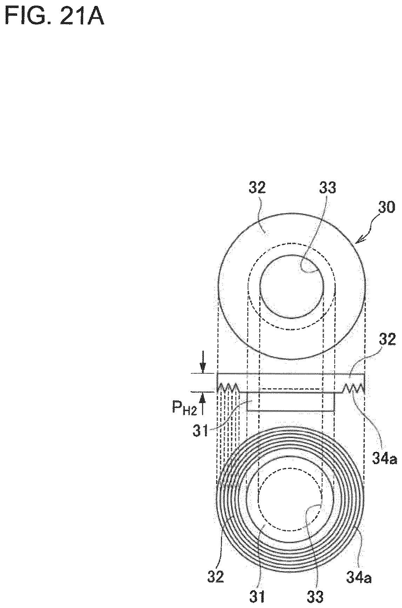

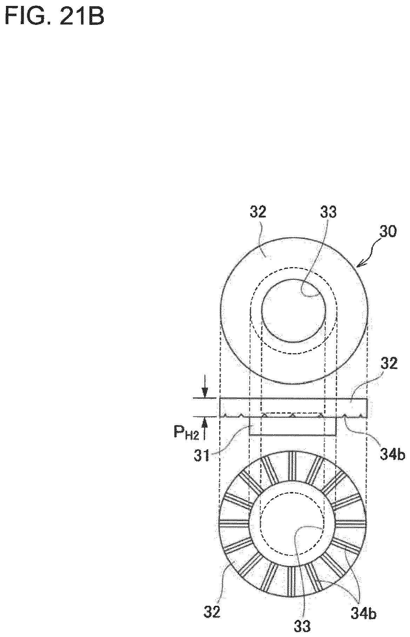

In the joining assist member 30, the surface of the non-insertion portion 32 to come into contact with the top plate 10 needs not always be a flat surface as shown in FIG. 3. That is, as shown in FIG. 21A and FIG. 21B, when necessary, the surface of the non-insertion portion 32 to come into contact with the top plate 10 may have slits 34a or 34b. In particular, where the surface to come into contact with the top plate 10 has circumferential slits 34a or radial slits 34b, applied adhesive 60 goes into the slits 34a or 34b and does not go away, whereby stable sticking is attained and a reliable sealing effect is obtained. In the case of having such a non-flat surface, a portion having the largest height is defined as the height P_{H2} of the non-insertion portion.

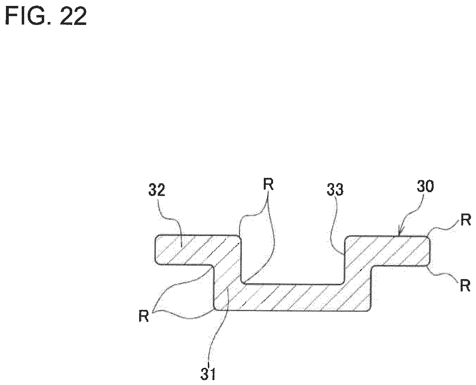

Shaping the edges of the joining assist member 30 into curved portions R as shown in FIG. 22 from the viewpoints of safety during use, forging restrictions, etc. poses no problems.

Since the welding method of this embodiment can be called spot welding where there is a small joining area, in the case of joining overlapped portions J of materials of actual use having a relatively large joining area, the welding method according to the embodiment may be employed at plural positions in manners shown in FIG. 23A to FIG. 23C. With this measure, strong joining can be attained in the overlapped portions J. Whereas the embodiment can be used for open section structures as exemplified in FIG. 23B and FIG. 23C, it can be used particularly suitably for closed section structures as exemplified in FIG. 23A.

As described above, the spot welding method for dissimilar material joining according to the embodiment includes a step of making a hole 11 through a top plate 10; a step of overlapping the top plate 10 and a bottom plate 20; a step of inserting a joining assist member 30 made of steel into the hole 11 formed in the top plate 10, the joining assist member 30 having a stepped external shape including an insertion portion 31 and a non-insertion portion 32, and having a recess 33 in a central portion recessed in a direction from the non-insertion portion 32 to the insertion portion 31; and a step of irradiating the recess 33 of the joining assist member 30 with laser light L to join the bottom plate 20 and the insertion portion 31 of the joining assist member 30 with a weld metal 40 formed.

This method makes it possible to join the top plate 10 made of an aluminum alloy or a magnesium alloy and the bottom plate 20 made of steel with improved efficiency and quality of being high in strength and reliability, and can be applied to both of an open section structure and a closed section structure with no limitations.

The above method further includes, before the overlapping step, a step of applying an adhesive 60 to at least one of overlapped surfaces of the top plate 10 and the bottom plate 20 around the hole 11 over its entire circumference. With this measure, the adhesive not only increases the strength of a joint but also serves as a sealing material and can thereby lower the corrosion rates of the top plate 10, the bottom plate 20, and the weld metal 40.

In the inserting step, an adhesive 60 is applied to at least one of confronting surfaces of the non-insertion portion 32 of the joining assist member 30 and the top plate 10 opposed to the non-insertion portion 32. With this measure, the corrosion rates of the top plate 10, the joining assist member 30, and the weld metal 40 can be lowered.

In the inserting step or after the welding step, an adhesive 60 is applied to a boundary between the non-insertion portion 32 of the joining assist member 30 and a surface of the top plate 10. With this measure, the joining strength of the top plate 10 and the joining assist member 30 can be increased. Applying the adhesive 60 in the inserting step can provide an effect of fixing the joining assist member 30 tentatively.

The height P_{H1} of a bottom portion 31a of the insertion portion 31 of the joining assist member 30 is 0.5 mm or larger and equal to or smaller than a smaller value of 2.5 mm or smaller and 125% of the thickness B_{H} of the first plate. This makes it possible to perform laser welding with high efficiency while securing necessary strength of a joint.

The angle θ formed by an outer wall surface 31b of the insertion portion 31 and the horizontal direction is 80° to 95°. This makes it possible to provide a joining assist member 30 that is strong enough to counter stress in the shearing direction and provide a necessary welding area without increasing the outer diameter of the non-insertion portion 32.

The diameter P_{D1} of a boundary between the insertion portion 31 and the non-insertion portion 32 of the joining assist member 30 is 80% or larger and 105% or smaller of the diameter B_{D} of the hole 11 of the top plate 10. This makes it possible to satisfy both of necessary resistance to external stress in the thickness direction of the top plate 10 and ease of insertion of the joining assist member 30.

The diameter P_{D2} of the non-insertion portion 32 of the joining assist member 30 is 105% or larger of the diameter B_{D} of the hole 11 of the top plate 10. This allows the non-insertion portion 32 to function to provide resistance force against external stress in the thickness direction.

The height P_{H2} of the non-insertion portion 32 of the joining assist member 30 is 50% or larger and 150% or smaller of the thickness B_{H} of the first plate. This allows the non-insertion portion 32 to function to provide resistance force against external stress in the thickness direction while taking appearance and weight increase into consideration.

The joining assist member 30 according to the embodiment is made of steel, has a stepped external shape including an insertion portion 31 and a non-insertion portion 32 and has recess 33 in a central portion recessed in a direction from the non-insertion portion 32 to the insertion portion 31. Configured in this manner, the joining assist member 30 can be used suitably for the above-described spot welding method for dissimilar material joining using laser welding.

The dissimilar material welded joint 1 according to the embodiment includes a top plate 10 made of an aluminum alloy or a magnesium alloy and a bottom plate 20 made of steel and spot-welded to the top plate 10, wherein the top plate 10 has a hole 11 that reaches an overlapped surface to the bottom plate 20, wherein the dissimilar material welded joint 1 further includes a joining assist member 30 made of steel, the joining assist member 30 having a stepped external shape including an insertion portion 31 inserted in the hole 11 formed through the top plate 10 and a non-insertion portion 32 and having a recess 33 in a central portion recessed in a direction from the non-insertion portion 32 to the insertion portion 31, and wherein a weld portion W is formed at an interface between the bottom plate 20 and the insertion portion 31 of the joining assist member 30.

This dissimilar material welded joint 1 having the top plate 10 made of an A1 alloy or an Mg alloy and the bottom plate 20 made of steel is joined with high efficiency and quality of being high in strength and reliability, and can be applied to both of an open section structure and a closed section structure with no limitations.

### (Embodiment 2)

A spot welding method for dissimilar material joining, a joining assist member, and a dissimilar material welded joint according to a second embodiment of the invention will be hereinafter described in detail with reference to the drawings.

As described in the first embodiment, basically, a sound top plate 10 made of an Al alloy or Mg alloy and a sound bottom plate 20 made of steel is weld-joined only by laser welding. However, in the case where they are thick or strong in base material strength, the strength of a joint may be insufficient when it is produced by only forming a weld metal by laser welding. This is because the stiffness of the non-insertion portion 32 is lowered because its central portion is recessed and hence the non-insertion portion 32 is deformed when receiving strong stress in the peeling direction, as a result of which the top plate 10 is prone to come off the joining assist member 30.

When it is evaluated that the strength of a joint becomes insufficient because of the above phenomenon, improvement can be made by increasing the thickness of the joining assist member 30. However, in this embodiment, the stiffness of the joining portion is increased by filling the recess 33 with a weld metal 40 by performing laser/arc hybrid welding in which arc welding using a welding material (welding wire or filler described later) is performed, in addition to the laser welding.

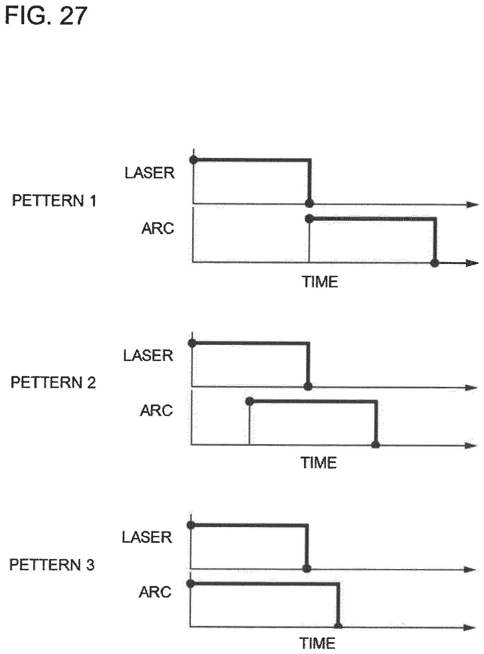

More specifically, boring work of step S1, overlapping work of step S2, and joining assist member 30 insertion work of step S3 are performed in the same manners as in the spot welding method for dissimilar material joining according to the first embodiment, and laser welding as described above arc welding are performed in any timing pattern shown in FIG. 27 (step S4).

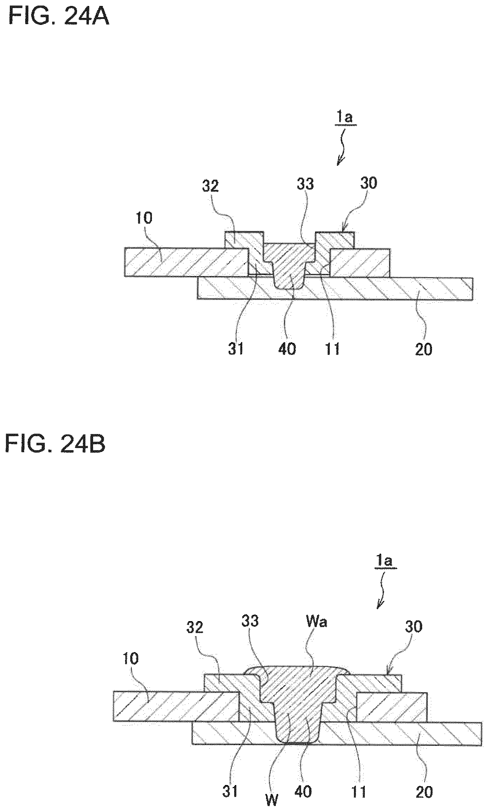

Thus, as shown in FIG. 24A and FIG. 24B, in the dissimilar material welded joint 1a, a weld metal 40 that constitutes a weld portion W is a melt mixture of the joining assist member 30 made of steel, the bottom plate 20 made of steel, and a welding material to provide an iron alloy or an Ni alloy and fills the recess 33 of the joining assist member 30.

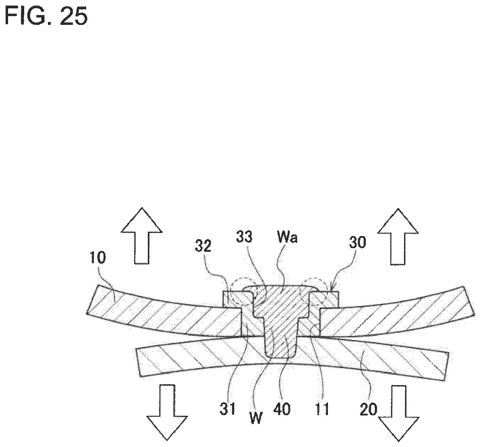

In particular, it is desirable that as shown in FIG. 24B the weld metal 40 not only fill up the recess 33 of the joining assist member 30 but also form an excess weld metal Wa on the surface of the joining assist member 30. As shown in FIG. 25, the formation of the excess weld metal Wa makes the joint strong with respect to external stress in the thickness direction (three-dimensional directions).

Specific examples of arc welding methods that can be combined with laser welding and forms a weld metal by melting a welding material include (a) the consumable-electrode gas-shielded arc welding method (MAG or MIG), (b) the gas tungsten arc welding method, and (c) the plasma arc welding method.

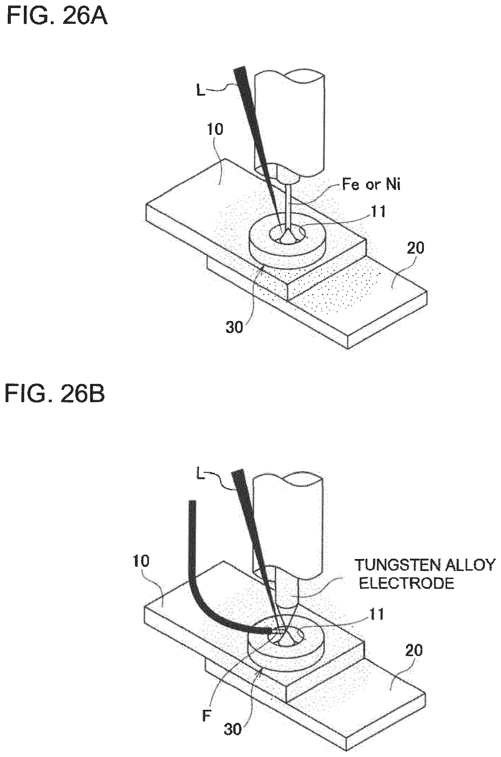

FIG. 26A shows a state where laser welding and MAG or MIG welding are being performed. FIG. 26B shows a state where laser welding and TIG welding or plasma welding are being performed.
(a) The consumable-electrode gas-shielded arc welding method, which is a welding method commonly called MAG or MIG, is a method in which a good welded portion is formed by using a solid wire or a flux-containing wire as a filler/arc generation consumable electrode and shielding it from the air by a shielding gas such as CO₂, O₂, Ar, or He.
(b) The gas tungsten arc welding method is one kind of gas-shielded arc welding method but is of a non-consumable-electrode type, and is commonly called TIG. An inert gas such as Ar or He is used as a shielding gas. An arc is generated between a tungsten electrode and a base material, and a filler wire F is supplied to the arc from the side.
   Whereas in general no current is applied to the filler wire, there exists hot wire TIG in which the melting rate is increased by applying a current to the filler wire. In this case, no arc is generated from the filler wire.
(c) The plasma arc welding method, which is the same as the TIG in the principle, is a welding method in which the arc power is increased by tightening an arc by employing double gas supply systems and increasing the gas supply rate.

As for the welding material, common welding wires can be employed as long as the weld metal 40 is made an Fe alloy. An Ni alloy can also be used because it does not cause any problems in welding to iron.

More specifically, on the market are JIS standard materials such as (a) Z3312, Z3313, Z3317, Z3318, Z3321, Z3323, and Z3334, (b) Z3313, (c) Z3316, S3321, and Z3334, and (d) Z3211, Z3221, Z3223, Z3224 and AWS (American Welding Society) standard materials such as (a) A5.9, A5.14, A5.18, A5.20, A5.22, A5.28, A5.29, and A5.34, (b) A5.20, (c) A5.9, A5.14, A5.18, and A5.28, and (d) A5.1, A5.4, A5.5, and A5.11.

The recess 33 of the joining assist member 30 is filled with a welding material using these arc welding methods. In general, it is not necessary to move the target position of the welding material. It is appropriate to finish the welding by ending arc formation after a lapse of a proper supply time.

As for the timing between the laser welding and the arc welding, as shown in FIG. 27, the arc welding may be performed after the laser light irradiation (pattern 1), at the same time as the laser light irradiation (pattern 3), or in the middle of the laser light irradiation with arc generation (pattern 2). None of these patterns impair the effect that laser light L causes deep penetration. On the other hand, if application of laser light L is started after the arc welding or in the middle of the arc welding, a weld pool of the filler wire formed impairs the effect that laser light L causes deep penetration, resulting in insufficient weld penetration. FIG. 26A and FIG. 26B show a case that the arc welding is started at the same time as or in the middle of the laser light irradiation.

As described above, the spot welding method for dissimilar material joining according to the embodiment includes a step of forming a hole 11 through a top plate 10; a step of overlapping the top plate 10 and a bottom plate 20; a step of inserting a joining assist member 30 made of steel into the hole 11 formed in the top plate 10, the joining assist member 30 having a stepped external shape including an insertion portion 31 and a non-insertion portion 32 and having a recess 33 in a central portion recessed in a direction from the non-insertion portion 32 to the insertion portion 31; and a step of irradiating the recess 33 of the joining assist member 30 with laser light L and performing arc welding by any method of the following (a) to (c) at the same time as the irradiation with laser light, in the middle of the irradiation with laser light or after the irradiation with laser light L to join the bottom plate 20 and the joining assist member 30 and fill at least a part of the recess 33 of the joining assist member 30 with a weld metal 40.
(a) a gas-shielded arc welding method using, as a consumable electrode, a welding wire to provide the weld metal 40 made of an iron alloy or an Ni alloy;
(b) a gas tungsten arc welding method using the welding wire as a non-consumable electrode filler; and
(c) a plasma arc welding method using the welding wire as a non-consumable electrode filler.

This method makes it possible to increase the stiffness of a joining portion by filling the recess 33 of the joining assist member 30 with a weld metal 40.

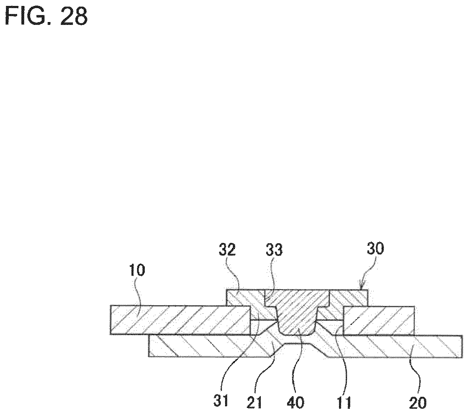

As in a modification shown in FIG. 28, a swell portion 21 may be formed in the bottom plate 20. In the case where the top plate 10 made of an Al alloy or an Mg alloy is relatively thin, welding can be performed satisfactorily by not working the bottom plate 20 at all and merely making a hole in the top plate 10 and inserting the joining assist member 30 in the hole 11 at the of joining. However, where the top plate 10 is thick, if the laser welding and the arc welding are combined, it takes long time to fill the recess 33 of the joining assist member 30, which means low efficiency. Furthermore, too large a quantity of heat is generated to cause burn-through failure or a large thermal strain. If the bottom plate 20 has the swell portion 21 formed by drawing as a countermeasure, the volume of the recess 33 is reduced, whereby the welding efficiency is increased and burn-through failure can be lowered.

In addition, in this modification, the swell portion 21 of the bottom plate 20 can be used as a mark when the top plate 10 and the bottom plate 20 are positioned with respect to each other. As a result, the swell portion 21 of the bottom plate 20 and the hole 11 of the top plate 10 can easily be positioned with respect to each other and the efficiency of overlapping work can be increased.

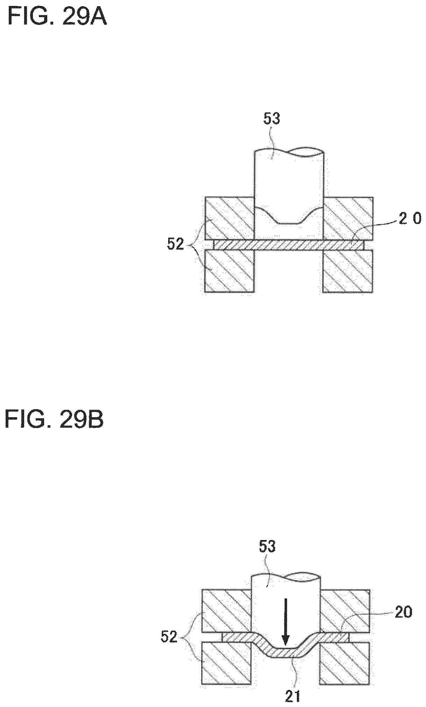

As shown in FIG. 29A, the swell portion 21 is drawn by fixing a portion, around a swell portion 21 forming portion, of the bottom plate 20 by dies 52. As shown in FIG. 29B, the swell portion 21 is then formed by pressing in a punch 53 and applying pressure to the swell portion 21 forming portion. It is desirable that the tip shape of the punch 53 be similar to the shape of the hole 11 of the top plate 10.

From the viewpoint of increasing the efficiency of overlapping work, it is possible to use this modification in which the swell portion 21 is formed in the bottom plate 20 in combination with the laser welding according to the first embodiment irrespective of the thickness of the top plate 10.

The invention is not limited to the above-described embodiment and Examples and various modifications, improvements, etc. are possible as appropriate.

### Examples

The effectiveness of the embodiments was confirmed using Examples A to E described below.

### <Examples A>

In Examples A, a lap joint was used having a combination of a 1.6 mm-thick top plate 10 made of an aluminum alloy A5083 and a 1.4 mm-thick bottom plate 20 made of 590 MPa-class high tensile strength steel. Joining was performed by 4 kW fiber laser welding. The laser beam diameter at the irradiation position was set at 0.4 mm, and the irradiation position was moved spirally so as to paint out a 5 mm-diameter circle irrespective of whether the steel joining assist member was used or not.

This welded joint 1 was subjected to breaking tests according to JIS Z3136 "Test piece dimensions and test method of shearing test of resistance spot and projection welded joint" and JIS Z3137 "Cross tension test for resistance spot and projection welded joint." In the following, tensile strength of Z3136 was referred to as TSS and tensile strength of Z3137 was referred to as CTS. Acceptance criteria were TSS ≥ 8 kN and CTS ≥ 5 kN.

To obtain not-indispensable but preferable performance values, the welded joint 1 was also subjected to JASO-CCT (Japanese Automobile Standards Organization Cyclic Corrosion Test) in which a welded joint was subjected to repetition of spraying of salt water, drying, and moistening to cause accelerated corrosion through 28 days. It was then subjected to the same breaking tests as described above to obtain TSS after corrosion and CTS after corrosion. Acceptance criteria for these preferable performance were that they should be 80% or larger of respective values of the tests without corrosion. The degree of sputtering during welding was evaluated by a state of sticking to the base materials. The case of almost no sticking was indicated by "A," the case where a certain degree of sticking occurred but was judged within an allowable range was indicated by "B," and the case where a high degree of sticking occurred and was not allowable was indicated by "C."

In Table 1, Comparative Examples are denoted by Nos. A1 to A6 and Examples are denoted by Nos. A7 to A16. (Symbol U means "used" and NU means "not used," and symbol F means "formed" and NF means "not formed.")

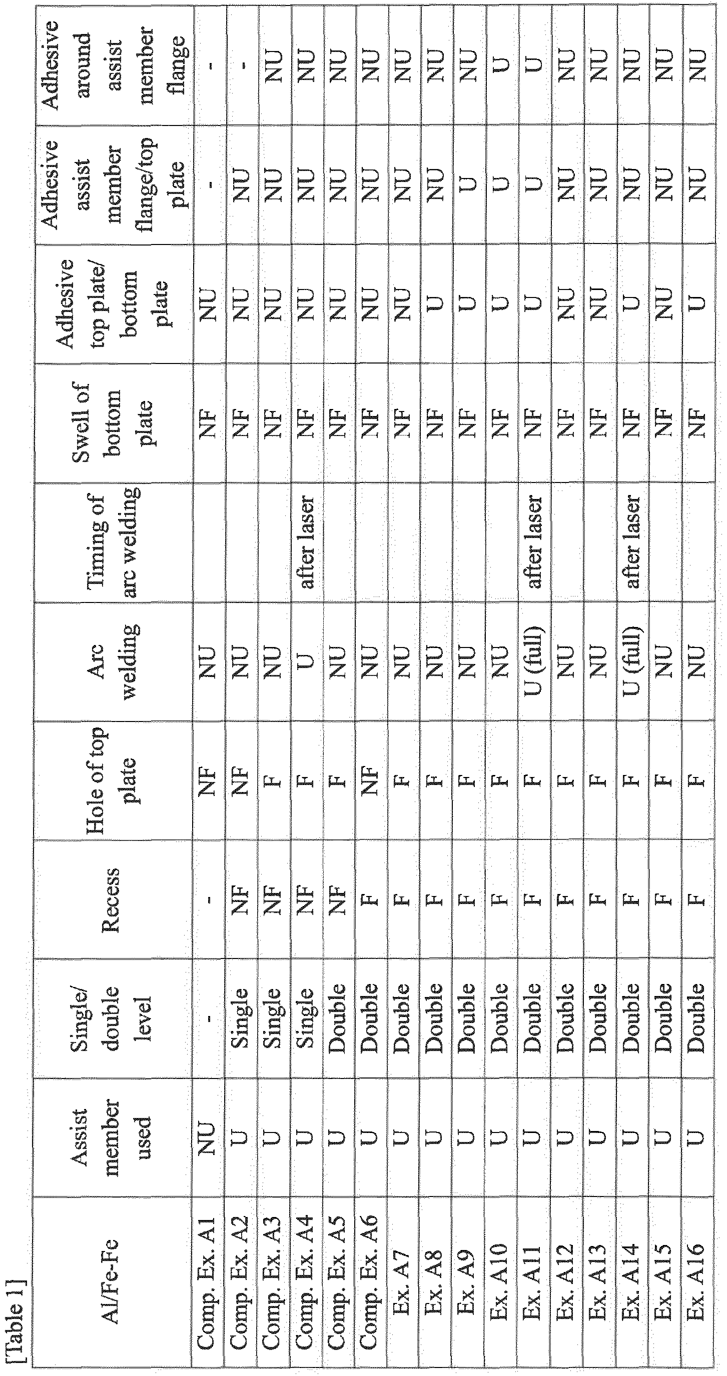

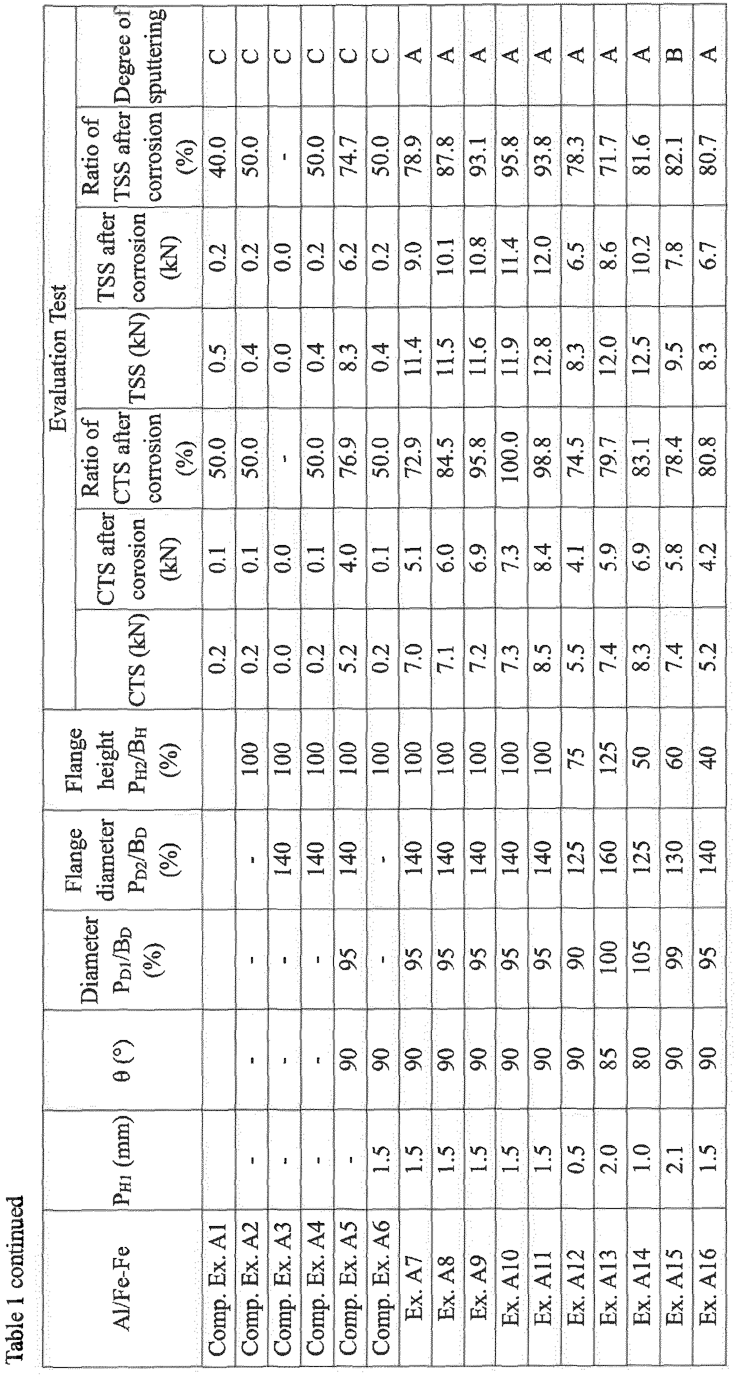

In No. A1, no joining assist member was used, no hole was made through the top plate 10, and laser welding was performed directly on the top plate 10. No adhesive was used. Since the aluminum alloy of the top plate and the steel of the bottom plate were melt-mixed, a weld metal formed was very fragile intermetallic compounds and TSS and CTS were low. The degree of sputtering was high because a violent chemical reaction occurred when aluminum and iron were melt-mixed with each other.

In No. A2, a joining assist member 30 having a single-level shape and a discoid shape with a diameter of 14.0 mm was put on the top plate 10 through which no hole was made and laser welding was performed from above the joining assist member 30. The material of the joining assist member 30 was JIS G3106 SM490C (this also applies to the following samples of Examples A). As a result, the three materials, that is, the aluminum alloy of the top plate, the steel of the joining assist member, and the steel of the bottom plate, were melt-mixed, and a weld metal formed was very fragile intermetallic compounds and TSS and CTS were low. The degree of sputtering was high because a violent chemical reaction occurred when aluminum and iron were melt-mixed with each other.

In No. A3, a joining assist member 30 having a single-level shape and having a discoid shape with diameter of 14.0 mm was put on the top plate 10 through which a 10 mm-diameter hole was made and laser light irradiation was performed from above the joining assist member 30. Since a gap that was the same as the thickness of the top plate 10 existed between the joining assist member 30 and the bottom plate 20, they could not be integrated together by the laser welding and the welding itself failed. Although no chemical reaction between iron and aluminum occurred, the formation of a weld pool was unstable. And the degree of sputtering scattered was high because the laser light irradiation surface was flat.

In No. A4, in addition to No. A3, consumable-electrode gas-shielded arc welding (MAG welding) was performed using a 1.2 mm-diameter JIS Z3312 YGW16 welding wire and a shielding gas of 80% Ar and 20% CO₂ at the same time of laser light irradiation. Although the gap between the joining assist member 30 and the bottom plate 20 was filled, weld penetration into the bottom plate 20 was not caused. TSS and CTS were low.

In No. A5, a circular joining assist member 30 having a two-level shape including an insertion portion 31 and a non-insertion portion 32a was put on the top plate 10 through which a 10 mm-diameter hole was made and laser light irradiation was performed from above the joining assist member 30. The joining assist member 30 had the insertion portion 31 having an outer diameter P_{D1} of 9.5 mm, no recess, and a flat top surface. Although the joining assist member 30 and the bottom plate 20 were welded and the strength of a joint was high, a large amount of sputtered material was produced and scattered and was stuck to neighboring portions of the base materials to lower the quality of a product because the irradiation surface was flat and the irradiation time was long.

In No. A6, a circular joining assist member 30 having a two-level shape including an insertion portion 31 and a non-insertion portion 32 and having a recess 33 at the top was put on the top plate 10 and the circular bottom surface of the recess 33 was irradiated with laser light. The outer diameter P_{D1} of the insertion portion 31 of the joining assist member 30 was 9.5 mm and the inner diameter of the recess 33 was 5.5 mm. No hole was made through the top plate 10. Thus, the three materials, that is, the aluminum alloy of the top plate 10, the steel of the joining assist member 30, and the steel of the bottom plate 20, were melt-mixed, and a weld metal formed was very fragile intermetallic compounds and TSS and CTS were low. Since a violent chemical reaction occurred when aluminum and iron were melt-mixed with each other, the degree of sputtering was high though the irradiation surface was recessed.

On the other hand, in Nos. A7 to A16, a circular steel joining assist member 30 having a recess 33 and having a two-level shape was inserted into a 10 mm-diameter hole of the top plate 10 and was welded to the bottom plate 20 by irradiating the circular surface of the recess 33 with laser light from above. In addition, in Nos. A11 and A14, MAG welding which is one kind of arc welding was started at the same time as the end of the laser welding and the recess 33 was filled up until formation of an excess weld metal. The conditions of the MAG welding were the same as in No. A4.

In the test samples of Nos. A7 to A16, since inflow of aluminum into a weld metal formed did not occur at all to ensure formation of a high-quality weld metal and the non-insertion portion 32 of the joining assist member 30 was wider than the hole 11 of the top plate 10, full coming-ofF did not occur and high CTS was obtained in the cross tension test. The degree of sputtering scattered was lowered because the recess was formed at the irradiation position.

In the test samples (Nos. A8 to A11, A14, and A16) in which a normal temperature quick setting type two-liquid-mixing adhesive for metal was applied at a proper location(s), an effect of preventing electric corrosion at aluminum-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. A7, No. A8, No. A9, and No. A10. It is also seen that the joint strength of No. A11 in which arc welding was also performed is even higher in terms of both of CTS and TSS than that of No. A10.

### <Examples B>

In Examples B, a lap joint was used having a combination of a 0.8 mm-thick top plate 10 made of a magnesium alloy ASTM AZ31B and a 1.0 mm-thick bottom plate 20 made of 780-MPa-class high tensile strength steel. Joining was performed by 3 kW semiconductor (diode) laser welding. The laser beam diameter at the irradiation position was set at 0.65 mm, and the irradiation position was moved spirally so as to paint out a 3.5 mm-diameter circle irrespective of whether the joining assist member 30 was used or not.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 4 kN and CTS ≥3 kN.

To obtain not-indispensable but preferable performance values, as in Examples A, the welded joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion. The degree of sputtering during welding was evaluated by a state of sticking to the base materials. The case of almost no sticking was indicated by "A," the case where a certain degree of sticking occurred but was judged within an allowable range was indicated by "B," and the case where a high degree of sticking occurred and was not allowable was indicated by "C."

In Table 2, Comparative Examples are denoted by Nos. B1 to B5 and Examples are denoted by Nos. B6 to B12.

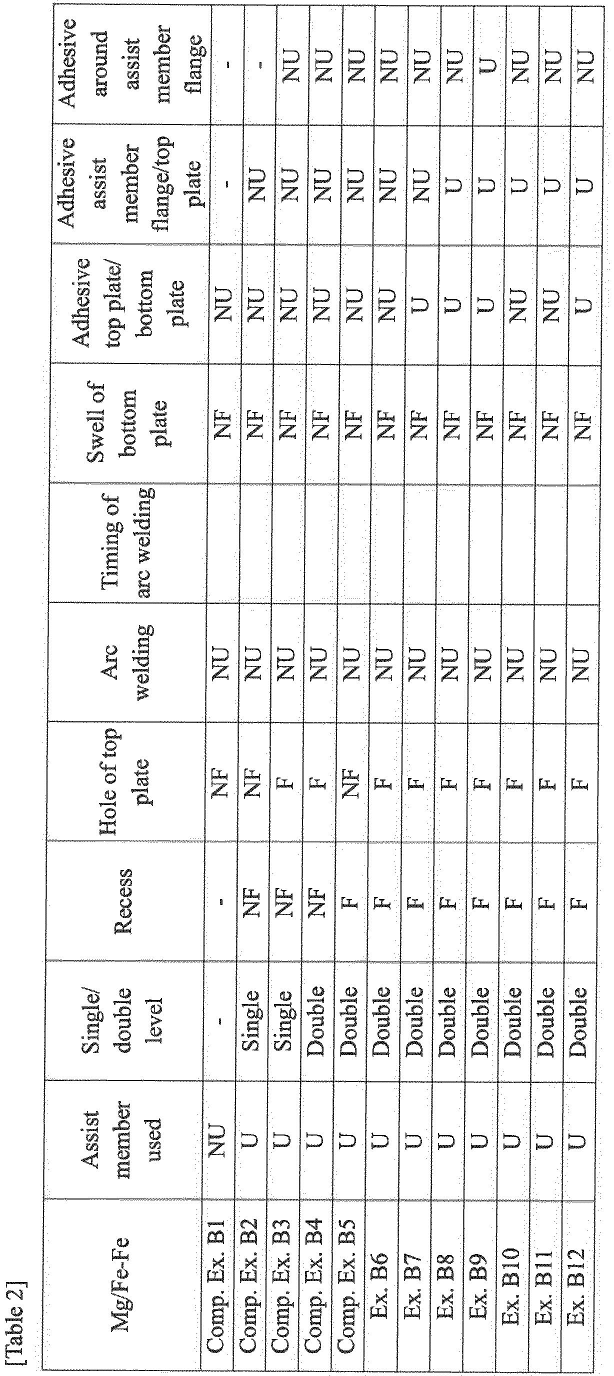

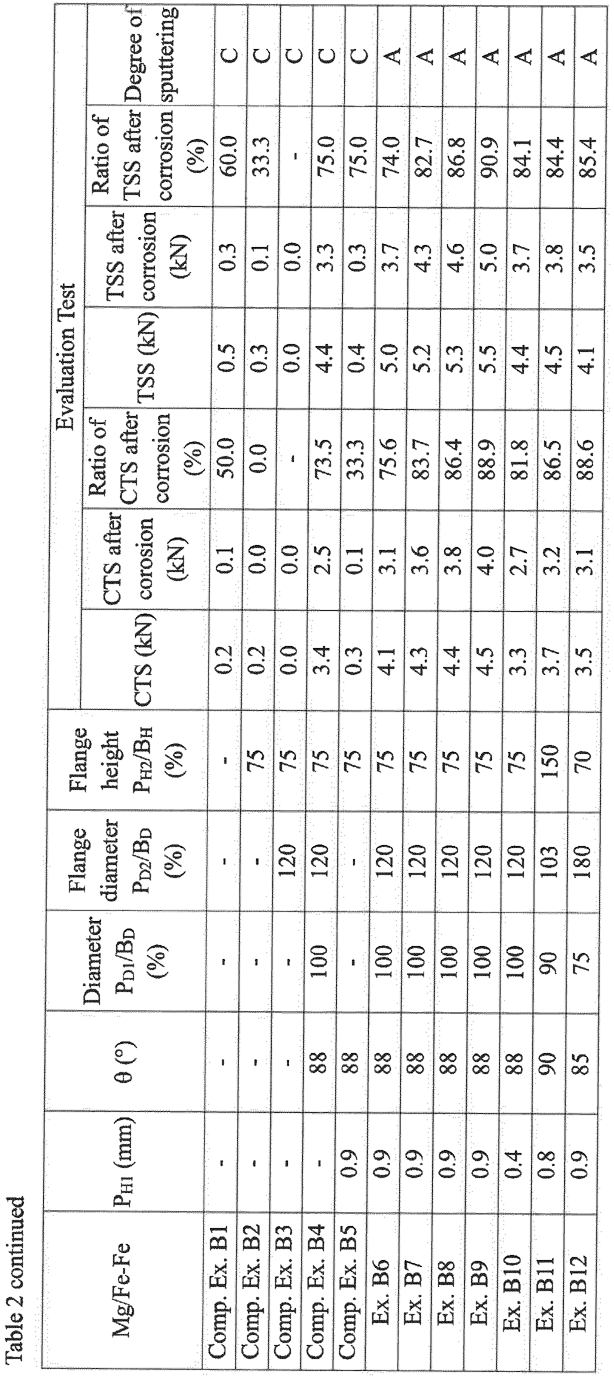

In No. B1, no joining assist member was used, no hole was made through the top plate 10, and laser welding was performed directly on the top plate 10. No adhesive was used. Since the magnesium alloy of the top plate and the steel of the bottom plate were melt-mixed, a weld metal formed was very fragile intermetallic compounds and TSS and CTS were low. The degree of sputtering was high because a violent chemical reaction occurred when magnesium and iron were melt-mixed with each other.

In No. B2, a joining assist member 30 having a single-level shape and having a discoid shape with diameter of 7.8 mm was put on the top plate 10 through which no hole was made and laser welding was performed from above the joining assist member 30. The material of the joining assist member 30 was JIS G3101 SS400 (this also applies to the following samples of Examples B). As a result, the three materials, that is, the magnesium alloy of the top plate, the steel of the joining assist member, and the steel of the bottom plate, were melt-mixed, and a weld metal formed was very fragile intermetallic compounds and TSS and CTS were low. The degree of sputtering was high because a violent chemical reaction occurred when magnesium and iron were melt-mixed with each other.

In No. B3, a joining assist member 30 having a single-level shape and having a discoid shape with diameter of 7.8 mm was put on the top plate 10 through which a 6.5 mm-diameter hole was made and laser light irradiation was performed from above the joining assist member 30. Since a gap that was the same as the thickness of the top plate 10 existed between the joining assist member 30 and the bottom plate 20, they could not be integrated together by the laser welding and the welding itself failed. Although no chemical reaction between iron and magnesium occurred, the formation of a weld pool was unstable. And the degree of sputtering scattered was high because the laser light irradiation surface was flat.

In No. B4, a joining assist member 30 having a two-level shape including an insertion portion 31 and a non-insertion portion 32 was put on the top plate 10 through which a 6.5 mm-diameter hole was made and laser light irradiation was performed from above the joining assist member 30. The joining assist member 30 had the insertion portion 31 having an outer diameter P_{D1} of 6.5 mm, no recess, and a flat top surface. Although the joining assist member 30 and the bottom plate 20 were welded and the joint strength was high, a large amount of sputtered material was produced and scattered and was stuck to neighboring portions of the base materials to lower the quality of a product because the irradiation surface was flat and the irradiation time was long.

In No. B5, a joining assist member 30 having a two-level shape including an insertion portion 31 and a non-insertion portion 32 and having a circular recess 33 at the top was put on the top plate 10 and the bottom surface of the recess 33 was irradiated with laser light. The outer diameter P_{D1} of the insertion portion 31 of the joining assist member 30 was 6.5 mm and the inner diameter of the recess 33 was 3.8 mm. No hole was made through the top plate 10. Thus, the three materials, that is, the magnesium alloy of the top plate 10, the steel of the joining assist member 30, and the steel of the bottom plate 20, were melt-mixed, and a weld metal formed was very fragile intermetallic compounds and TSS and CTS were low. Since a violent chemical reaction occurred when magnesium and iron were melt-mixed with each other, the degree of sputtering was high though the irradiation surface was recessed.

On the other hand, in Nos. B6 to B12, a circular steel joining assist member 30 having a recess 33 and having a two-level shape was inserted into a 6.5 mm-diameter circular hole of the top plate 10 and was welded to the bottom plate 20 by irradiating the circular surface of the recess 33 with laser light from above. In these test samples, since inflow of magnesium into a weld metal formed did not occur at all to ensure formation of a high-quality weld metal and the non-insertion portion 32 of the joining assist member 30 was wider than the hole 11 of the top plate 10, full coming-off did not occur and high CTS was obtained in the cross tension test. The degree of sputtering scattered was lowered because the recess was formed at the irradiation position.

Furthermore, in the test samples (Nos. B7 to B12) in which a normal temperature quick setting type two-liquid-mixing adhesive for metal was applied at a proper location(s), an effect of preventing electric corrosion at magnesium-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. B6, No. B7, No. B8, and No. B9.

### <Examples C>

In Examples C, a lap joint was used having a combination of a 2.6 mm-thick top plate 10 made of an aluminum alloy A6061 and a 2.2 mm-thick bottom plate 20 made of 400 MPa-class steel. Joining was performed by 5 kW YAG laser welding. The laser beam diameter at the irradiation position was set at 0.5 mm, and the irradiation position was moved spirally so as to paint out a 6 mm-diameter circle irrespective of whether the joining assist member 30 was used or not.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 9 kN and CTS ≥6kN.

To obtain not-indispensable but preferable performance values, as in Examples A and B, the welded joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion. The degree of sputtering during welding was evaluated by a state of sticking to the base materials. The case of almost no sticking was indicated by "A," the case where a certain degree of sticking occurred but was judged within an allowable range was indicated by "B," and a case that a high degree of sticking occurred and was not allowable was indicated by "C."

In Table 3, Comparative Examples are denoted by Nos. C1 to C8 and Examples are denoted by Nos. C9 to C15.

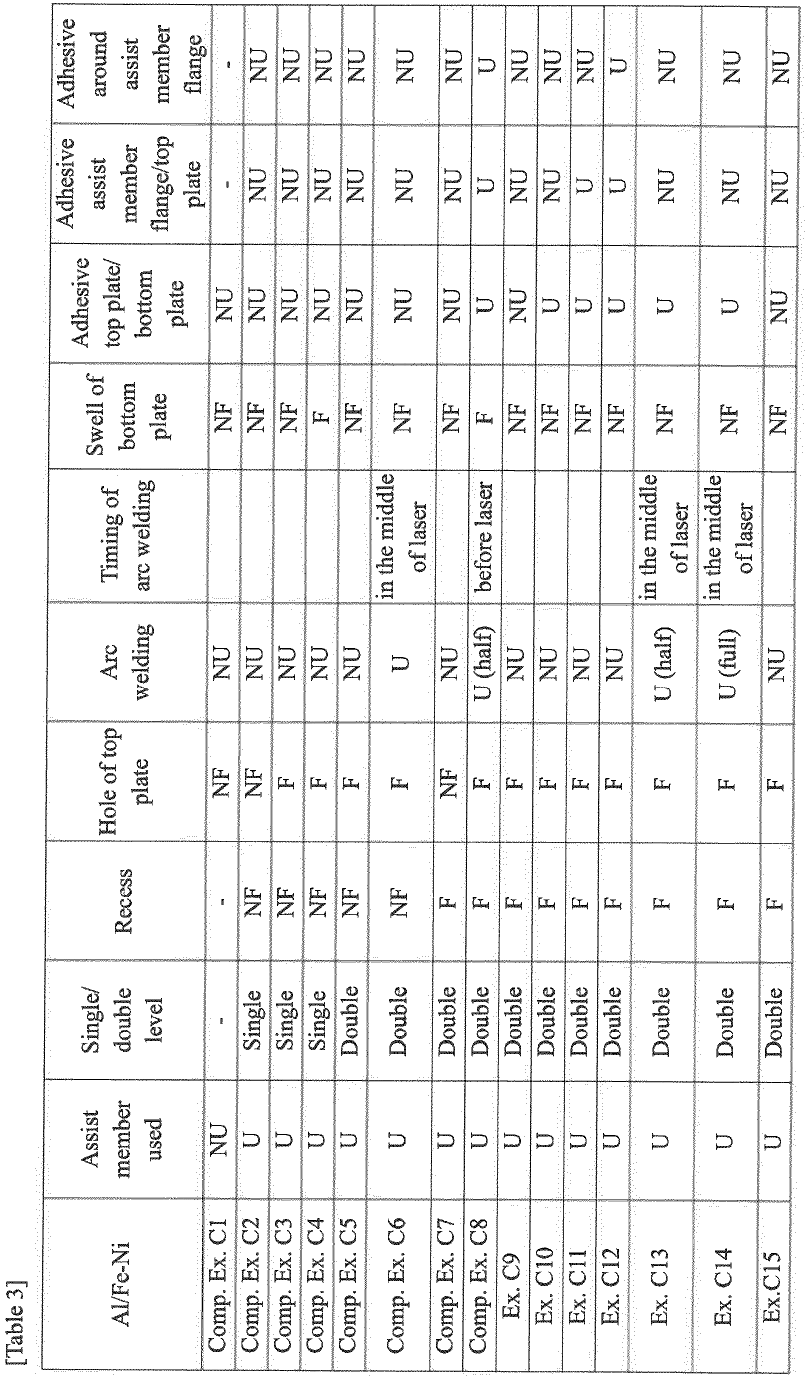

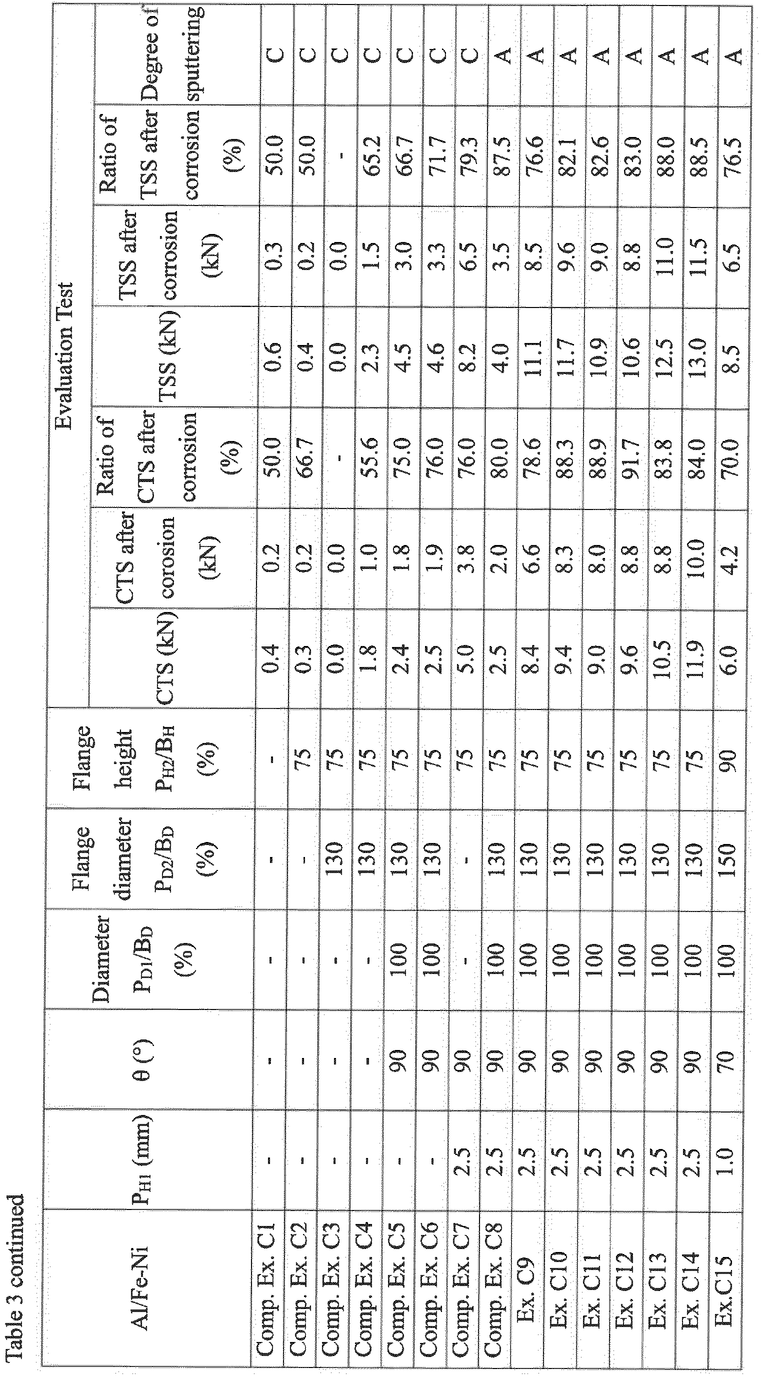

In No. C1, no joining assist member was used, no hole was made through the top plate 10, and laser welding was performed directly on the top plate 10. No adhesive was used. Since the aluminum alloy of the top plate and the steel of the bottom plate were melt-mixed, a weld metal formed was very fragile intermetallic compounds and TSS and CTS were low. The degree of sputtering was high because a violent chemical reaction occurred when aluminum and iron were melt-mixed with each other.

In No. C2, a joining assist member 30 having a round-corner square shape with a side of 14.3 mm and having a single-level shape was put on the top plate 10 through which no hole was made and laser welding was performed from above the joining assist member 30. The material of the joining assist member 30 was JIS G4305 SUS304L (this also applies to the following samples of Examples C). As a result, the three materials, that is, the aluminum alloy of the top plate 10, the steel of the joining assist member 30, and the steel of the bottom plate 20, were melt-mixed, and a weld metal formed was very fragile intermetallic compounds and TSS and CTS were low. The degree of sputtering was high because a violent chemical reaction occurred when aluminum and iron were melt-mixed with each other.

In No. C3, a joining assist member 30 having a round-corner square shape with a side of 14.3 mm and having a single-level shape was put on the top plate 10 through which a 11.0 mm-diameter circular hole was made and laser light irradiation was performed from above the joining assist member 30. Since a gap that was the same as the thickness of the top plate 10 existed between the joining assist member 30 and the bottom plate 20, they could not be integrated together by the laser welding and the welding itself failed. Although no chemical reaction between iron and aluminum occurred, the formation of a weld pool was unstable. And the degree of sputtering scattered was high because the laser light irradiation surface was flat.

In No. C4, in addition to No. C3, a swell portion was formed in the bottom plate 20. The gap of 2.6 mm that was the same as the thickness of the top plate could not be filled and they could not be integrated together by the laser light irradiation. TSS and CTS were low because of insufficient weld penetration.

In No. C5, a joining assist member 30 having a round-corner square shape with a side of 14.3 mm and having a two-level shape including an insertion portion 31 and a non-insertion portion 32 was inserted into a 11.0 mm-diameter circular hole made through the top plate 10 and laser light irradiation was performed from above the joining assist member 30. The joining assist member 30 had an outer diameter P_{D1} of 11.0 mm, no recess, and a flat top surface. Since the joining assist member 30 had no recess and hence was thick, weld penetration into the bottom plate 20 caused by the laser light irradiation was shallow and no large CTS and TSS values were obtained. Since the irradiation surface was flat and the irradiation time was long, a large amount of sputtered material was produced and scattered and was stuck to neighboring portions of the base materials to lower the quality of a product.

In No. C6, in addition to No. C5, arc welding was started from a halfway time point of a laser light irradiation period. The arc welding method was a TIG welding method in which a 1.2 mm-diameter Ni alloy wire that complied with the JIS Z3334 S Ni6625 standard was used as a filler and the shielding gas composition was 100% Ar. Even with this welding method, deep weld penetration into the bottom plate 20 could not be attained. A weld metal that was a molten filler wire flew out to around the joining assist member 30 to deteriorate the appearance very much.

In No. C7, a joining assist member 30 having a round-corner square shape with a side of 14.3 mm, having a two-level shape including an insertion portion 31 and a non-insertion portion 32 and having a circular recess 33 at the top was put on the top plate 10 and the bottom surface of the recess 33 was irradiated with laser light. The outer diameter P_{D1} of the insertion portion 31 of the joining assist member 30 was 11.0 mm and the inner diameter of the recess 33 was 6.4 mm. No hole was made through the top plate 10. Thus, the three materials, that is, the aluminum alloy of the top plate, the steel of the joining assist member, and the steel of the bottom plate, were melt-mixed, and a weld metal formed was very fragile intermetallic compounds and TSS and CTS were low. Since a violent chemical reaction occurred when aluminum and iron were melt-mixed with each other, the degree of sputtering was high though the irradiation surface was recessed.

In No. C8, a joining assist member 30 having a round-corner square shape with a side of 14.3 mm and having a circular recess 33 and a two-level shape, which was the same joining assist member 30 as in No. C7, was inserted into a 11.0 mm-diameter circular hole of the top plate 10 and arc welding was performed on the surface of the recess 33 from above the joining assist member 30 until the recess 33 was filled with a weld metal to the center of the thickness P_{H2} of the non-insertion portion 32 of the joining assist member 30. Laser welding was performed after stopping the arc welding. Since the arc welding was performed before the laser welding, the effect by the laser welding of causing deep weld penetration was lost and weld penetration in the joining assist member 30 and the bottom plate 20 was insufficient. TSS and CTS were therefore low.

On the other hand, in Nos. C9 to C15, a joining assist member 30 in which a non-insertion portion 32 was a round-corner square shape and having a circular recess 33 and a two-level shape was inserted into a 11.0 mm-diameter circular hole of the top plate 10 and was welded to the bottom plate 20 by irradiating the surface of the recess 33 with laser light from above. In the joining assist member 30, the outer diameter P_{D1} of the insertion portion 31 was 11.0 mm and the inner diameter of the recess 33 was 6.4 mm. In these test samples, since inflow of aluminum into a weld metal formed did not occur at all to ensure formation of a high-quality weld metal and the non-insertion portion 32 of the joining assist member 30 was wider than the hole 11 of the top plate 10, full coming-off did not occur and high CTS was obtained in the cross tension test. The degree of sputtering scattered was lowered because the recess was formed at the irradiation position.

Furthermore, in Nos. C13 and C14, in addition to No. C10, arc welding was started from a halfway time point of a laser welding irradiation time. The arc welding conditions were the same as in No. C6. In No. C13, a weld metal was formed to the center of the thickness of the thickness P_{H2} of the non-insertion portion 32 of the joining assist member 30. In No. C14, a weld metal was formed until formation of an excess weld metal. It is seen that both of CTS and TTS were increased by filling with a weld metal.

Still further, in the test samples (No. C10 to C14) in which a normal temperature quick setting type two-liquid-mixing adhesive for metal was applied at a proper location(s), an effect of preventing electric corrosion at aluminum-steel interfaces was obtained, whereby reduction in CTS and TSS due to corrosion was suppressed and high CTS and TSS after corrosion were obtained. More specifically, it is seen that the CTS after corrosion and the TSS after corrosion increase as the number of adhesive application locations increases in order of No. C9, No. C10, No. C11, and No. C12.

### <Examples D>

In Examples D, a lap joint was used having a combination of a 1.2 mm-thick top plate 10 made of an aluminum alloy A6N01 and a 1.2 mm-thick bottom plate 20 made of 1,480 MPa-class heat treated steel. Joining was performed by 3 kW disk laser welding. The laser beam diameter at the irradiation position was set at 0. 5 mm, and the irradiation position was moved reciprocally so as to paint out a 4.0 mm-diameter circle irrespective of whether the joining assist member was used or not.

This welded joint 1 was subjected to breaking tests according to JIS Z3136 and JIS Z3137. In the following, tensile strength of Z3136 was referred to as TSS and tensile strength of Z3137 was referred to as CTS. Acceptance criteria were TSS ≥ 6 kN and CTS ≥4 kN.

To obtain not-indispensable but preferable performance values, as in Examples A, B, and C, the welded joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion. The degree of sputtering during welding was evaluated by a state of sticking to the base materials. The case of almost no sticking was indicated by "A," the case where a certain degree of sticking occurred but was judged within an allowable range was indicated by "B," and the case where a high degree of sticking occurred and was not allowable was indicated by "C."

In Table 4, Comparative Examples are denoted by Nos. D1 and D2 and Examples are denoted by Nos. D3 to D5.

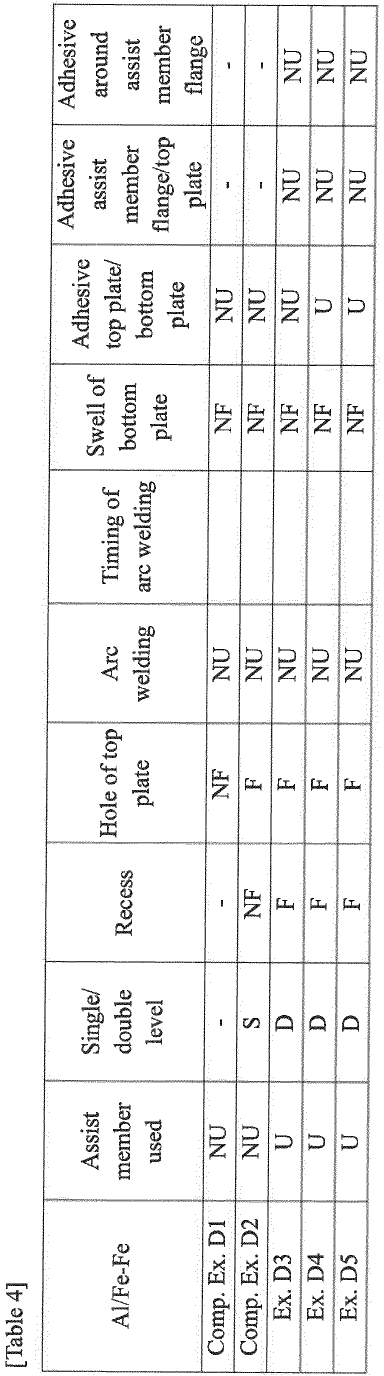

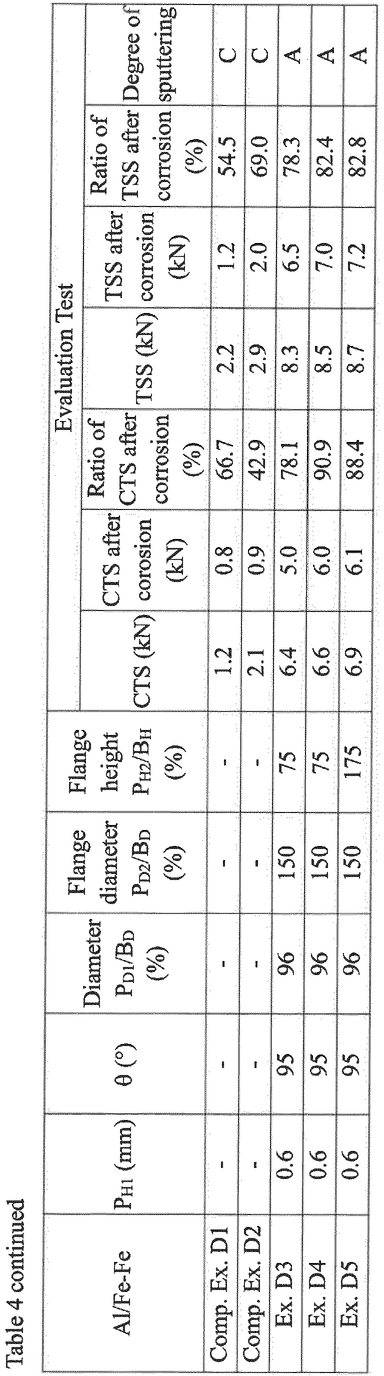

In No. D1, no joining assist member was used, no hole was made through the top plate 10, and laser welding was performed directly on the top plate 10. No adhesive was used. Since the aluminum alloy of the top plate and the steel of the bottom plate were melt-mixed, a weld metal formed was very fragile intermetallic compounds and TSS and CTS were low. The degree of sputtering was high because a violent chemical reaction occurred when aluminum and iron were melt-mixed with each other.

In No. D2, a joining assist member 30 having a regular-octagon shape with 9.75 mm diameter and having a single-level shape was put on the top plate 10 through which a 6.5 mm-diameter circular hole was made and laser light irradiation was performed from above the joining assist member 30. Since a gap that was the same as the thickness of the top plate 10 existed between the joining assist member 30 and the bottom plate 20, they could not be integrated together by the laser welding and the welding itself failed. Although no chemical reaction between iron and aluminum occurred, the formation of a weld pool was unstable. And the degree of sputtering scattered was high because the laser light irradiation surface was flat.

On the other hand, in Nos. D3 to D5, a steel joining assist member in which the non-insertion portion 32 was a regular-octagon shape with 9.75 mm diameter 30 and having a circular recess 33 and a two-level shape was inserted into a 6.5 mm-diameter circular hole of the top plate 10 and was welded to the bottom plate 20 by irradiating the surface of the recess 33 with laser light from above. In the joining assist member 30, the outer diameter P_{D1} of the insertion portion 31 was 6.24 mm and the inner diameter of the recess 33 was 4.4 mm. In these test samples, since inflow of aluminum into a weld metal formed did not occur at all to ensure formation of a high-quality weld metal and the non-insertion portion 32 of the joining assist member 30 was wider than the hole 11 of the top plate 10, full coming-off did not occur and high CTS was obtained in the cross tension test. The degree of sputtering scattered was lowered because the recess was formed at the irradiation position.

Furthermore, in the test samples (Nos. D4 and D5) in which an adhesive was applied at a proper location, an effect of preventing electric corrosion at aluminum-steel interfaces was obtained, whereby reduction in CTS and TSS due to corrosion was suppressed. No. D4 in which an adhesive was applied exhibited higher CTS and TSS after corrosion than No. D3 in which no adhesive was applied.

### <Examples E>

In Examples E, a lap joint was used having a combination of a 4.0 mm-thick top plate 10 made of an aluminum alloy A7N01 and a 3.0 mm-thick bottom plate 20 made of 1,180 MPa-class high tensile strength steel. Joining was performed by a combination of 7 kW carbon dioxide laser welding and arc welding using the steel joining assist member 30 made of steel. A 12.5 mm-diameter circular hole was made through the top plate 10, and a 1.5 mm-height swell portion 21 was formed by drawing in the bottom plate 20 at a welding position and inserted into the hole 11 of the top plate 10 concentrically. The joining assist member 30 was made of 780 MPa-class high tensile strength steel, had a two-step circular shape, and had a circular recess 33.

The laser beam diameter at the irradiation position was set at 0.7 mm, and the irradiation position was moved spirally so as to circularly paint out the bottom surface of the recess 33 of the joining assist member 30. The arc welding method was specifically a plasma arc welding method using a 1.2 mm-diameter JIS Z3312 G78A4MN5CM3T steel welding wire as a filler and using 100% Ar as a plasma gas and 99% Ar and 1% H₂ as a shielding gas.

This welded joint 1 was subjected to breaking tests according to JIS Z3136 "Test piece dimensions and test method of shearing test of resistance spot and projection welded joint" and JIS Z3137 "Cross tension test for resistance spot and projection welded joint." In the following, tensile strength of Z3136 was referred to as TSS and tensile strength of Z3137 was referred to as CTS. Acceptance criteria were TSS ≥ 10 kN and CTS ≥ 8 kN.

To obtain not-indispensable but preferable performance values, as in Examples A to D, the welded joint 1 was also subjected to JASO-CCT for 28 days and then subjected to the same breaking tests as described above to obtain TSS after corrosion and CTS after corrosion. Acceptance criteria for these preferable performance values were that they should be 80% or larger of respective values of the tests without corrosion. The degree of sputtering during welding was evaluated by a state of sticking to the base materials. The case of almost no sticking was indicated by "A," the case where a certain degree of sticking occurred but was judged within an allowable range was indicated by "B," and the case where a high degree of sticking occurred and was not allowable was indicated by "C."

In Table 5, Comparative Example is denoted by No. E1 and Examples are denoted by Nos. E2 to E4.

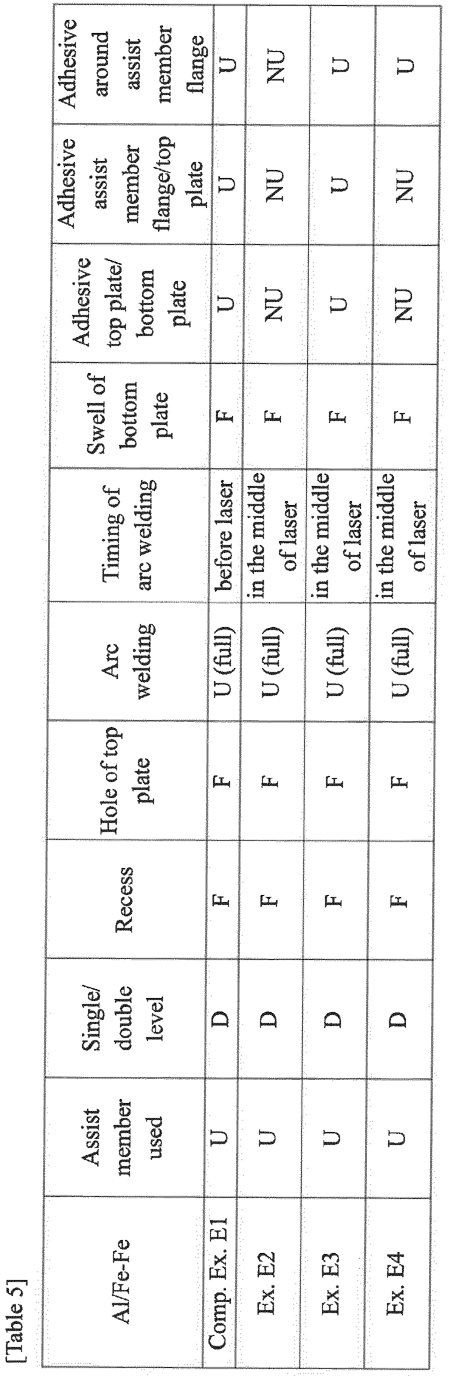

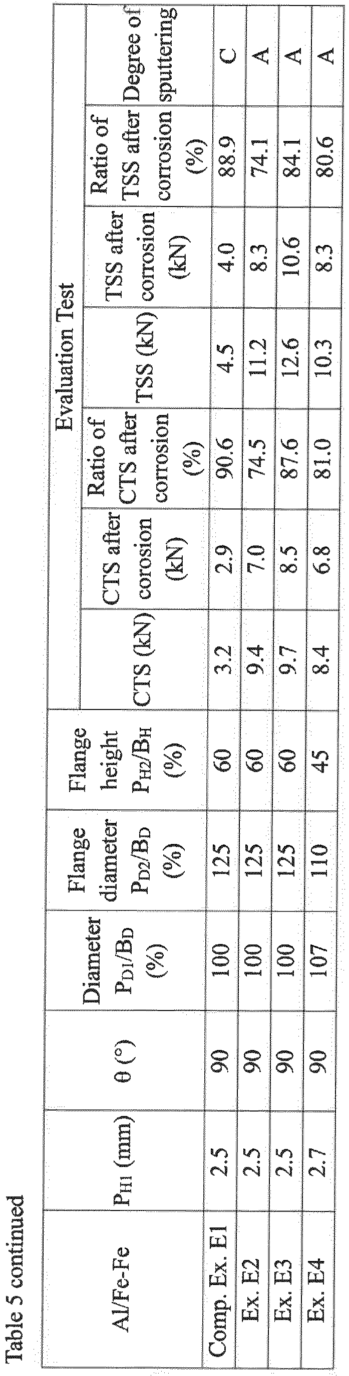

In No. E1, laser welding and arc welding was combined in such a manner that the arc was performed first to fill the recess 33 of the joining assist member 30 and the laser was started from a hallway time point of the arc welding and finished at the same time as the arc. A weld metal stayed on the bottom of the recess 33 and hence the effect by laser welding of causing deep weld penetration could not be obtained, as a result of which the joining between joining assist member 30 and the steel bottom plate was insufficient and both of TSS and CTS were low. Furthermore, since a weld metal filled up the recess 33 of the joining assist member 30, an effect was lost that the inner wall surface of the recess 33 of the joining assist member 30 catch sputtered material produced by the laser welding and hence a large amount of sputtered material scattered to the neighborhood.

On the other hand, in Nos. E2 to E4, laser was performed first to melt the joining assist member 30 and the bottom plate 20 sufficiently and integrating them together and arc was started thereafter. Since inflow of aluminum into a weld metal formed did not occur at all to ensure formation of a high-quality weld metal and the non-insertion portion 32 of the joining assist member 30 was wider than the hole 11 of the top plate 10, full coming-off did not occur and high CTS was obtained in the cross tension test. Whereas the arc was continued until the recess 33 of the joining assist member 30 was filled up, the laser light irradiation was finished at a halfway point of the arc welding. As a result, sputtered material produced by the laser welding was caught by the wall surface of the recess 33 of the joining assist member 30 and did not scattered to the neighborhood. The formation of the swell portion 21 of the bottom plate 20 not only facilitated the work of overlapping the top plate 10 and the bottom plate 20 on each other but also decreased the welding sectional area and contributed to attaining high efficiency.

Furthermore, in the test samples of Nos. E3 and E4 in which an adhesive was applied at a proper location(s), an effect of preventing electric corrosion at aluminum-steel interfaces was obtained, whereby reduction in CTS and TSS due to corrosion was suppressed. No. E3 in which an adhesive was applied exhibited higher CTS and TSS after corrosion than No. E2 in which no adhesive was applied.

The present application is based on Japanese Patent Application No. 2016-187536 filed on September 26, 2016, the disclosure of which is incorporated herein by reference.

### Description of Symbols

10: Top plate
11: Hole
20: Bottom plate
30: Joining assist member
31: Insertion portion
32: Non-insertion portion
33: Recess
40: Weld metal
W: Weld portion
Wa: Excess weld metal

## Claims

1. A spot welding method for dissimilar material joining for joining a first plate made of an aluminum alloy or a magnesium alloy and a second plate made of steel, the method comprising:
a step of making a hole through the first plate;
a step of overlapping the first plate and the second plate;
a step of inserting a joining assist member made of steel into the hole formed in the first plate, the joining assist member having a stepped external shape including an insertion portion and a non-insertion portion and having a recess in a central portion recessed in a direction from the non-insertion portion to the insertion portion; and
a step of irradiating the recess of the joining assist member with laser light to join the second plate and the joining assist member.

2. A spot welding method for dissimilar material joining for joining a first plate made of an aluminum alloy or a magnesium alloy and a second plate made of steel, the method comprising:
a step of making a hole through the first plate;
a step of overlapping the first plate and the second plate;
a step of inserting a joining assist member made of steel into the hole formed in the first plate, the joining assist member having a stepped external shape including an insertion portion and a non-insertion portion and having a recess in a central portion recessed in a direction from the non-insertion portion to the insertion portion; and
a step of irradiating the recess of the joining assist member with laser light and performing arc welding by any method of the following (a) to (c) at the same time as the irradiation with laser light, in the middle of the irradiation with laser light or after the irradiation with laser light to join the second plate and the joining assist member and fill at least a part of the recess of the joining assist member with a weld metal:
(a) a gas-shielded arc welding method using, as a consumable electrode, a welding wire to provide the weld metal made of an iron alloy or a nickel alloy;
(b) a gas tungsten arc welding method using the welding wire as a non-consumable electrode filler; and
(c) a plasma arc welding method using the welding wire as a non-consumable electrode filler.

3. The spot welding method for dissimilar material joining according to claim 1 or 2, wherein the second plate has a swell portion formed by drawing, and the swell portion of the second plate is placed in the hole of the first plate in the overlapping step.

4. The spot welding method for dissimilar material joining according to claim 1 or 2, further comprising, before the overlapping step, a step of applying an adhesive to at least one of overlapped surfaces of the first plate and the second plate around the hole over its entire circumference.

5. The spot welding method for dissimilar material joining according to claim 1 or 2, wherein in the inserting step, an adhesive is applied to at least one of confronting surfaces between the non-insertion portion of the joining assist member and the first plate opposed to the non-insertion portion.

6. The spot welding method for dissimilar material joining according to claim 1 or 2, wherein in the inserting step or after the welding step, an adhesive is applied to a boundary between the non-insertion portion of the joining assist member and a surface of the first plate.

7. The spot welding method for dissimilar material joining according to claim 1 or 2, wherein a height P_{H1} of a bottom portion of the insertion portion of the joining assist member is 0.5 mm or larger and equal to or smaller than a smaller value of 2.5 mm or smaller and 125% of a thickness B_{H} of the first plate.

8. The spot welding method for dissimilar material joining according to claim 1 or 2, wherein an angle θ formed by an outer wall surface of the insertion portion and a horizontal direction is 80° to 95°.

9. The spot welding method for dissimilar material joining according to claim 1 or 2, wherein a diameter P_{D1} of a boundary between the insertion portion and the non-insertion portion of the joining assist member is 80% or larger and 105% or smaller of a diameter B_{D} of the hole of the first plate.

10. The spot welding method for dissimilar material joining according to claim 1 or 2, wherein the non-insertion portion of the joining assist member has a diameter P_{D2} of 105% or larger of a diameter B_{D} of the hole of the first plate.

11. The spot welding method for dissimilar material joining according to claim 1 or 2, wherein the non-insertion portion of the joining assist member has a height P_{H2} of 50% or larger and 150% or smaller of a thickness B_{H} of the first plate.

12. A joining assist member to be used for the spot welding method for dissimilar material joining according to claim 1 or 2, the joining assist member being made of steel, having a stepped external shape including an insertion portion and a non-insertion portion and having a recess in a central portion recessed in a direction from the non-insertion portion to the insertion portion.

13. A dissimilar material welded joint comprising a first plate made of an aluminum alloy or a magnesium alloy and a second plate made of steel and spot-welded to the first plate,
wherein the first plate has a hole that reaches an overlapped surface to the second plate,
the dissimilar material welded joint further comprises a joining assist member made of steel, having a stepped external shape including an insertion portion inserted in the hole formed in the first plate and a non-insertion portion and having a recess in a central portion recessed in a direction from the non-insertion portion to the insertion portion, and
a weld portion is formed of the second plate and the joining assist member at an interface between the second plate and the insertion portion of the joining assist member.

14. The dissimilar material welded joint according to claim 13, wherein the weld portion further fills at least a part of the recess of the joining assist member.

15. The dissimilar material welded joint according to claim 13, wherein a swell portion formed in the second plate is placed in the hole of the first plate.

16. The dissimilar material welded joint according to claim 13, comprising an adhesive applied to at least one of overlapped surfaces of the first plate and the second plate around the hole over its entire circumference.

17. The dissimilar material welded joint according to claim 13, comprising an adhesive applied to at least one of confronting surfaces between the non-insertion portion of the joining assist member and the first plate opposed to the non-insertion portion.

18. The dissimilar material welded joint according to claim 13, comprising an adhesive applied to a boundary between the non-insertion portion of the joining assist member and a surface of the first plate.

19. The dissimilar material welded joint according to claim 13, wherein a height P_{H1} of a bottom portion of the insertion portion of the joining assist member is 0.5 mm or larger and smaller than a smaller value of 2.5 mm or smaller and 125% of a thickness B_{H} of the first plate.

20. The dissimilar material welded joint according to claim 13, wherein an angle θ formed by an outer wall surface of the insertion portion and a horizontal direction is 80° to 95°.

21. The dissimilar material welded joint according to claim 13, wherein a diameter P_{D1} of a boundary between the insertion portion and the non-insertion portion of the joining assist member is 80% or larger and 105% or smaller of a diameter B_{D} of the hole of the first plate.

22. The dissimilar material welded joint according to claim 13, wherein the non-insertion portion of the joining assist member has a diameter P_{D2} of 105% or larger of a diameter B_{D} of the hole of the first plate.

23. The dissimilar material welded joint according to claim 13, wherein the non-insertion portion of the joining assist member has a height P_{H2} of 50% or larger and 150% or smaller of a thickness B_{H} of the first plate.
